# EUROPEAN PATENT SPECIFICATION

(11) **EP 2 136 508 B1**
(45) Date of publication and mention of the grant of the patent: **03.12.2014**
(21) Application number: 08757898.5
(22) Date of filing: 01.07.2008
(51) Int. Cl.: H04L 29/12, H04L 29/06

(54) **A method and system for network access**
Netzzugangsverfahren und -system
Procédé et système pour l'accès au réseau

(30) Priority: 02.07.2007 CN 200710028951; 18.07.2007 CN 200710138938
(43) Date of publication of application: 23.12.2009
(73) Proprietor: Huawei Technologies Co., Ltd., Longgang District, Shenzhen Guangdong 518129 (CN)
(72) Inventor: ZHENG, Ruobin, Shenzhen 518129 (CN)
(74) Representative: Kreuz, Georg Maria
(86) International application number: PCT/CN2008/071506
(87) International publication number: WO 2009/003409

(56) References cited:
- CN-A- 1 450 766
- CN-A- 1 889 577
- MORAND FRANCE TELECOM R&D R MAGLIONE TELECOM ITALIA J KAIPPALLIMALIL HUAWEI TECHNOLOGIES A YEGIN SAMSUNG L: "Application of PANA framework to DSL networks; draft-morand-pana-panaoverdsl-00.txt" IETF STANDARD-WORKING-DRAFT, INTERNET ENGINEERING TASK FORCE, IETF, CH, 14 September 2006 (2006-09-14), XP015047164 ISSN: 0000-0004
- JAYARAMAN NET COM R LOPEZ UNIV OF MURCIA Y OHBA (ED) TOSHIBA M PARTHASARATHY NOKIA A YEGIN SAMSUNG P: "Protocol for Carrying Authentication for Network Access (PANA) Framework; draft-ietf-pana-framework-07.txt" IETF STANDARD-WORKING-DRAFT, INTERNET ENGINEERING TASK FORCE, IETF, CH, vol. pana, no. 7, 22 August 2006 (2006-08-22), XP015046885 ISSN: 0000-0004
- FORSBERG NOKIA Y OHBA (ED) TOSHIBA B PATIL NOKIA H TSCHOFENIG SIEMENS A YEGIN SAMSUNG D: "Protocol for Carrying Authentication for Network Access (PANA); draft-ietf-pana-pana-12.txt" IETF STANDARD-WORKING-DRAFT, INTERNET ENGINEERING TASK FORCE, IETF, CH, vol. pana, no. 12, 22 August 2006 (2006-08-22), XP015046886 ISSN: 0000-0004
- MORAND FRANCE TELECOM R&D S KUMAR SAMSUNG INDIA SOFTWARE OPERATIONS A YEGIN SAMSUNG ADVANCED INSTITUTE OF TECHNOLOGY S MADANAPALLI: "DHCP options for PANA Authentication Agents; draft-ietf-dhc-paa-option-04.txt" IETF STANDARD-WORKING-DRAFT, INTERNET ENGINEERING TASK FORCE, IETF, CH, vol. dhc, no. 4, 11 September 2006 (2006-09-11), XP015046670 ISSN: 0000-0004
- PRUSS G ZORN CISCO SYSTEMS R MAGLIONE TELECOM ITALIA R: "Authentication Extensions for the Dynamic Host Configuration Protocol; draft-pruss-dhcp-auth-dsl-01.txt" IETF STANDARD-WORKING-DRAFT, INTERNET ENGINEERING TASK FORCE, IETF, CH, no. 1, 19 May 2007 (2007-05-19), XP015050319 ISSN: 0000-0004

## Description

### Field of the Invention

The present invention relates to the network communication field, and in particular, to a network access method, system, and apparatus.

### Background of the Invention

The Dynamic Host Configuration Protocol (DHCP) is a mechanism for dynamically assigning IP addresses and configuration parameters. It is mainly applied in large networks and in networks where it is hard to implement configuration. A DHCP system includes a DHCP server and DHCP clients. Some systems also include a DHCP authentication server (AS). The DHCP server automatically assigns IP addresses and configuration parameters to clients, making communications between the computers in the network much easier. The DHCP server performs centralized management on all configuration information, assigns IP addresses, configures a large number of other parameters, and manages IP addresses by lease. Thus, the DHCP system has various advantages such as time division multiplex of IP addresses, and has been widely applied in networks.

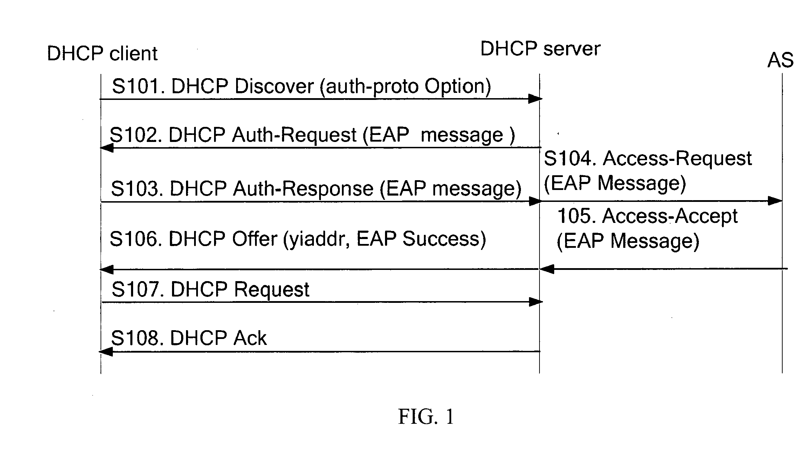

In the DHCP system, the DHCP server manages all IP network settings and processes the requests of DHCP clients, whereas the DHCP clients use the IP environment information distributed by the DHCP server. FIG. 1 is a flowchart of DHCP authentication in the prior art. As shown in FIG.1, the system includes a DHCP client, a DHCP server, and an AS. The DHCP client is a host or a device that may obtain configuration parameters (such as IP address) through DHCP. The DHCP server, which is deployed on a router, an L3 switch, or a special DHCP server, provides DHCP services and IP addresses or other network parameters for different DHCP clients. The AS authenticates the authentication information provided by DHCP clients and returns the authentication results to DHCP clients. FIG. 1 shows a combination of DHCPv4 messages and DHCP options in the prior art. Options can be customized by vendors to provide more setting information. The following describes the DHCP authentication process with reference to FIG. 1 and Table 1. In the prior art, the DHCP authentication is implemented through two DHCPv4 messages (DHCP Auth-request and DHCP-response) or one DHCP message (DHCP EAP) and two DHCP Option messages (authentication protocol Option (auth-proto) and EAP-Message Option).

**Table 1**

| **DHCPv4 Message** | **EAP Message** | **Function Description** |
|---|---|---|
| DHCP Discover (auth-proto Option) | - | 1. This message is broadcast to request a DHCP server and its IP address. The source IP address of this message is 0.0.0.0. |
| | | 2. This message indicates the authentication mode supported by the DHCP client. |
| | | It is sent from the DHCP client to the DHCP server. |
| DHCP Auth-response (EAP-Message Option)/DHCP EAP(EAP-Message Option) | EAP Request /Response | This message carries a corresponding EAP message. |
| | | It is sent from the DHCP client to the DHCP server. |
| DHCP Auth-request (EAP-Message Option) /DHCP EAP(EAP-Message Option) | EAP Request /Response | This message carries a corresponding EAP message. |
| | | It is sent from the DHCP server to the DHCP client. |
| DHCP Offer (EAP-Message Option) | EAP Success/Failure | 1. This message carries configurable network parameters such as a user's IP address. |
| | | 2. This message carries a corresponding EAP message. |
| | | It is sent from the DHCP server to the DHCP client. |

Step S101: When connecting to the network, the DHCP client broadcasts a DHCP Discover message to the DHCP server. The auth-proto Option in the DHCP Discover message carries the authentication mode supported by the DHCP client. The DHCP Discover message is used to request the IP address of a DHCP server. The source IP address of this message is 0.0.0.0.
Step S102: After receiving the DHCP Discover message, the DHCP server returns a DHCP Auth-request or DHCP EAP message to the DHCP client. The EAP Request message is carried in the EAP-Message Option of the DHCP Auth-request message or the DHCP EAP message.
Step S103: After receiving the DHCP Auth-request or DHCP EAP message, the DHCP client sends a DHCP Auth-response message to the DHCP server. The EAP Response message is carried in the EAP-Message Option of the DHCP Auth-response message or the DHCP EAP message.
[0001] Step S104: The DHCP server encapsulates the EAP message sent by the DHCP client in an Authentication, Authorization and Accounting (AAA) message and sends the AAA message to the AS.
Step S105: The AS sends the authentication result to the DHCP server. If the authentication succeeds, the AS sends an EAP Success message to the DHCP server through the AAA protocol.
Step S106: The DHCP server constructs a DHCP Offer message carrying the EAP Success message, and sends the DHCP Offer message to the DHCP client. The DHCP Office message carries the IP address to be assigned to the DHCP client in the your ip address (yiaddr) option.
Step S107: After receiving the DHCP Offer message, the DHCP client returns a DHCP request message to the DHCP server.
Step S108: The DHCP server returns a DHCPACK message to the DHCP client.

In the foregoing solution, corresponding EAP messages are carried in the messages between the DHCP server and the AS during authentication, which causes changes in the processing flows between the DHCP server and the AS. Therefore, it is necessary to reconstruct the DHCP server and AS to support corresponding authentication functions, thus increasing the operation cost. In addition, in the process shown in FIG. 1, authentication may proceed only after the DHCP client is assigned a static IP address. In the process of dynamic IP address assignment, if a user does not have an IP address before the authentication, the authentication process starting from step S102 may not be performed.

Morand France Telecom R&D R Maglione Telecom Italia J Kaippallimalil Huawei Technologies A Yegin Samsung L: "application of PANA framework to DSL networks; draft-morand-pana-panaoverdsl-00.txt" IETF Standard-Working-Draft, Internet Engineering Task Force, IETF, CH, 14 September 2006 (2006-09-14) discloses the introduction of PANA in DSL networks migrating from a traditional PPP access model to a pure IP-based access environment. (See paragraph 1 in page 3 of document D1); and the FIG 5 of the document D1 also discloses "IP addresses are configured using DHCP. DSL network operator allocates temporary IP address until hosts are authenticated. After a successful authentication, hosts have to configure a new IP address for communication with other nodes,"(See FIG 5, section 6.5 in page 11 of document D1).

Jayaraman Net Com R Lopez Univ of Murcia Y Ohba(ED) Toshiba M Parthasarathy Nokia A Yegin Samsung P: "Protocol for Carrying Authentication for Network Access (PANA) Framework; draft-ietf-pana-framerwork-07.txt" IETF STANDARD-WORKING-DRAFT, INTERNET ENGINEERING TASK FORCE, IETF, CH, vol. pana, no. 7, 22 August 2006 (2006-08-22) discloses how these various PANA and other network access authentication elements interact with each other (See section I, paragraph 5 in page 3 of document D2), and the document D2 also discloses that the PaC (the PANA Client) dynamically or statically configures an IP address prior to running PANA. After the successful PANA authentication, depending on the deployment scenario the PaC may need to re-configure its IP address or configure additional IP address (See section 3, paragraph 4 in page 7).

Forsberg Nokia Y Ohba (ED) Toshiba B Patil Nokia H Tschofenig Simens A Yegin Samsung D: "Protocol for Carrying Authentication for Network Access (PANA); draft-ietf-pana-pana-12. txt" IETF STANDARD-WORKING-DRAFT, INTERNET ENGINEERING TASK FORCE, IETF, CH, vol. pana, no.12, 22 August 2006(2006-08-22) discloses the PANA session in the access phase can enter the re-authentication phase to extend the current session lifetime by re-executing EAP. Once the re-authentication phase successfully completes, the session re-enters the access phase (See section 4.6, paragraph 1 in page18). When the PaC wants to initiate re-authentication, it sends a PANA-Reauth-Request message to the PAA. This message must contain a session-ID AVP which is used for identifying the PANA session on the PAA. If the PAA already has an established PANA session for the PaC with the matching session identifier, it must first respond with a PANA-Reauth-Answer message, followed by a PANA-Auth-Request that starts a new EAP authentication.

Morand France Telecom R&D S Kumar Samsung India Software Operations A Yegin Samsung Advanced Institute of Technology S Madanapalli: "DHCP options for PANA Authentication Agents; draft-ietf-dhc-paa-option-04.txt" IETF STANDARD-WORKING-DRAFT, INTERNET ENGINEERING TASK FORCE, IETF, CH, vol. dhc, no. 4, 11 September 2006(2006-09-11) discloses DHCPv4 and DHCPv6 options that allow PANA client to discover PANA Authentication Agents (PAA) (See section 1, paragraph 3, in page 3). The documents D4 also discloses a DHCPv4 option that carries a list of 32-bit IPv4 addresses indicating one or more PANA Authentication Agents (PAA) available to the PANA client (See section 4, paragraph 1 in page 4).

Pruss G Zorn Cisco Systems R Maglione Telecom Italia R: "Authentication Extensions for the Dynamic Host Configuration Protocol; draft-pruss-dhcp-auth-ds1-01. txt" IETF STANDARD-WORKING-DRAFT, INTERNET ENGINEERING TASK FORCE, IETF, CH, no. 1, 19 May 2007(2007-05-19) discloses DHCP Options and procedures that allow for at least a Challenge-Handshake Authentication Protocol (CHAP)-based authentication exchange to occur in DHCP in order to enable smooth migration from Point-to-Point Protocol (PPP) sessions to IP sessions in a DSL Broadband network environment (See section 1, paragraph 1, in page 3).

### Summary of the Invention

Embodiments of the present invention provide a network access method, system, and apparatus to resolve the foregoing issue in the prior art. An access authenticator is set in the access system. Different DHCP clients may configure corresponding configuration parameters through a DHCP access authenticator to implement authentication. In this way, authentication may be performed without any change to the DHCP server.

To resolve the foregoing technical issue, a first aspect of the invention provides a network access method according to claims 1-4.

To resolve the foregoing technical issue, a second aspect of the invention provides a network access system according to claims 5 - 8.

In embodiments of the present invention, an access authenticator is set in the network to authenticate a client as an authentication agent of the client. In this way, a DHCP client may be authenticated without any special change to the DHCP server, but a first network address is provided for the client before the authentication. Thus, the stability of authentication is improved and the efficiency and success rate of authentication are increased.

### Brief Description of the Drawings

FIG. 1 is a flowchart of a DHCP authentication method in the prior art;
FIG. 2 shows a structure of a DHCP authentication system according to an embodiment of the present invention;
FIG. 3 is a schematic diagram illustrating an IP session during which packets or data streams are filtered in encrypted mode after DHCP authentication according to an embodiment of the present invention;
FIG. 4 is a schematic diagram illustrating an IP session during which packets or data streams are filtered in non-encrypted mode after DHCP authentication according to an embodiment of the present invention;
FIG. 5 is a flowchart of initial successful DHCP authentication through DHCPv4 messages in Table 2 according to an embodiment of the present invention;
FIG. 6 is a flowchart of initial unsuccessful authentication through DHCPv4 messages in Table 2 according to an embodiment of the present invention;
FIG. 7 is a flowchart of initial successful authentication through DHCPv6 messages in Table 3 according to an embodiment of the present invention;
FIG. 8 is a flowchart of initial unsuccessful authentication through DHCPv6 messages in Table 3 according to an embodiment of the present invention;
FIG. 9 is a simplified flowchart of initial successful authentication through DHCPv4 messages in Table 2 according to an embodiment of the present invention;
FIG. 10 is a flowchart of successful re-authentication through DHCPv4 messages in Table 2 according to an embodiment of the present invention;
FIG. 11 is a flowchart of initial successful authentication through DHCPv4 messages in Table 4 according to an embodiment of the present invention;
FIG. 12 is a flowchart of initial unsuccessful authentication through DHCPv4 messages in Table 5 according to an embodiment of the present invention;
FIG. 13 is a simplified flowchart of initial successful authentication through DHCPv4 messages in Table 4 according to an embodiment of the present invention;
FIG. 14 is a flowchart of successful re-authentication triggered by a DHCP client through DHCPv4 messages in Table 4 according to an embodiment of the present invention;
FIG. 15 is a flowchart of successful re-authentication triggered by a DHCP authenticator through DHCPv4 messages in Table 4 according to an embodiment of the present invention;
FIG. 16 is a flowchart of initial successful authentication through DHCPv4 messages in Table 5 according to an embodiment of the present invention;
FIG. 17 is another flowchart of initial successful authentication through DHCPv4 messages in Table 5 according to an embodiment of the present invention;
FIG. 18 is a flowchart of initial unsuccessful authentication through DHCPv4 messages in Table 5 according to an embodiment of the present invention;
FIG. 19 is another flowchart of initial unsuccessful authentication through DHCPv4 messages in Table 5 according to an embodiment of the present invention;
FIG. 20 is a flowchart of filtering packets or data streams in encrypted mode after successful DHCP authentication according to an embodiment of the present invention; and
FIG. 21 is a flowchart of filtering packets or data streams in non-encrypted mode after successful DHCP authentication according to an embodiment of the present invention.

### Detailed Description of the Invention

Embodiments of the present invention provide a network access method, system, and apparatus. DHCP authenticators are set in the authentication system. During authentication, different DHCP clients can find corresponding DHCP authenticators, and DHCP authenticators act as agents to authenticate the DHCP clients. Therefore, it is unnecessary to reconstruct the DHCP server, thus reducing the operation cost.

Embodiments of the present invention are hereinafter described in detail with reference to the accompanying drawings.

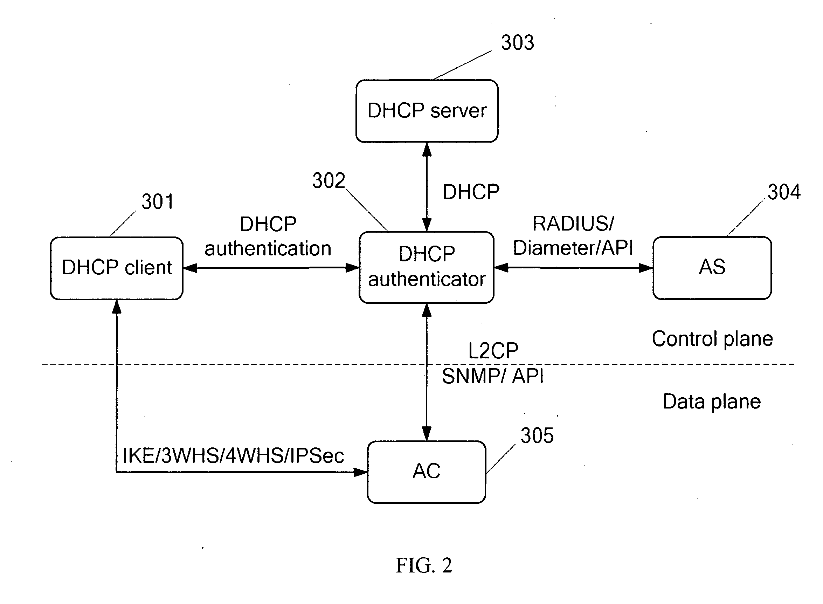

FIG. 2 shows a structure of a DHCP authentication system that separates authentication from control. The system includes multiple DHCP clients 301, a DHCP authenticator 302, an AS 304, a DHCP server 303, and an access controller (AC) 305. The AC 305 is located in the data plane, and other devices are located in the control plane.

A DHCP client 301 requests DHCP authentication. The DHCP client is allowed to access the network only after obtaining the DHCP authentication protocol. The DHCP client 301 is associated with the identity authentication information within the DHCP authentication protocol scope. The DHCP client 301 may be a terminal that connects to the network, such as a laptop, a personal digital assistant (PDA), a mobile phone, a personal computer, or a router. The DHCP client 301 needs to be authenticated by a DHCP authenticator 302 in corresponding mode.

A DHCP authenticator 302 is an access authenticator. The number of DHCP authenticators 302 may be set according to network requirements; that is, multiple DHCP authenticators 302 may be set. During DHCP authentication, a DHCP authenticator interacts with the supported DHCP client 301 through the DHCP authentication protocol. After receiving a DHCP Discover message from the DHCP client 301, the DHCP authenticator exchanges information with the DHCP server 303 and obtains the first configuration information, namely, an unleased IP address, for the DHCP client from the DHCP server 303. The DHCP authenticator 302, acting as the authentication agent of the DHCP client 301, interacts with the AS 304 through the AAA protocol, and authenticates and authorizes the DHCP client 301.The DHCP authenticator records the first configuration information returned by the DHCP server 303, replaces the unleased IP address in the first configuration information with an IP address used by the client in the local network, and sends the configuration information to the DHCP client 301. The DHCP authenticator 302 may update the access control status of the DHCP client 301 by adding or canceling the access right. The DHCP authenticator 302 also acts as a relay in the DHCP authentication process. The DHCP authenticator 302 may be a broadband remote access server (BRAS) on the IP edge node, or a broadband network gateway (BNG) in the network, or any other access device. The DHCP authenticator 302 may be integrated with the AS 304.

The DHCP authenticator 302 includes:
a first processing module, configured to: receive the DHCP Discover message sent by the DHCP client 301, return a response message, obtain the first configuration information (namely, a temporary IP address) for the DHCP client 301 to use during authentication, and send the information to the DHCP client 301;
an authenticating module, configured to authenticate the client locally or interact with the AS to authenticate the client remotely as an agent of the client;
a second processing module, configured to send a configuration request to the configuration server (namely, the DHCP server 303) to request the second configuration information used by the client during a session; and
a re-authenticating module, configured to re-authenticate the DHCP client 301 during the session.

The DHCP server 303 provides configuration services such as dynamic host configuration services for the DHCP client 301 through the DHCP protocol according to the request sent by the DHCP client 301, and provides the second configuration information (namely, an IP address for the DHCP client 301 to use in an session) after the authentication succeeds. The AS 304 checks the authentication information provided by the DHCP client 301 and returns the check result and authorization parameters to the DHCP client 301. The AS 304 may be located in the same node as the DHCP authenticator 302 and transfer data through an application programming interface (API). The AS 304 may also be a special AS in the network. If the DHCP authenticator 302 and the AS 304 are not located in the same network node, another protocol such as the RADIUS protocol or the Diameter protocol (the upgrade version of the RADIUS protocol) may be used to carry AAA messages to implement data interactions during the authentication.

The AC 305 is configured to: monitor the packets or data streams transmitted from or to the DHCP client 301, and filter the packets or data streams in non-encrypted or encrypted mode according to the access control policy obtained from the DHCP authenticator 302. The AC 305 may filter data streams at the link layer or at the network layer or communication layer above the network layer. Generally, the AC 305 is located on a link between the DHCP client 301 and the DHCP authenticator 302. If the network layer lacks security assurance, the encrypted filter mode should be adopted, and a security association (SA) should be established between the DHCP client 301 and the AC 305 through the Internet Key Exchange (IKE) protocol, or 802.11i 4-Way Handshake (4WHS) protocol, or 802.16 3-Way Handshake (3WHS) protocol. After the SA is established, a link-layer or network-layer encryption protocol may be used to protect data streams. The encryption protocol may be the IP Security Protocol (IPSec), or 802.11i link-layer encryption protocol, or 802.16 link-layer encryption protocol. If the DHCP authenticator 302 and the AC 305 are located in the same node, they may communicate with each other directly through the API. Otherwise, the Layer 2 Control Protocol (L2CP) or the Simple Network Management Protocol (SNMP) may be used. The AC 305 may include a detecting unit and a data filtering unit. The detecting unit is configured to monitor the packets or data streams transmitted by the client. The data filtering unit is configured to filter the packets or data streams in encrypted or non-encrypted mode according to the control policy provided by the DHCP authenticator 302. In this case, the DHCP authenticator 302 is connected to the DHCP server 303 and the AS 304, and provides related information such as control policies for the AC 305. This mode supports more flexible information acquisition and update. Certainly, the functions of monitoring and filtering the data or data streams transmitted by or to the DHCP client 301 may be implemented by other network access devices.

Moreover, during an IP session, the DHCP client 301 determines the IP session duration by lease, and the DHCP server 303 permits the DHCP client 301 to use a specific IP address within the specified period of time. Either the DHCP server 303 or the DHCP client 301 can terminate the lease at any time during the IP session. When over 50% of the lease of the DHCP client expires, the lease may be updated. An IP address may be reassigned to the DHCP client 301 when the lease is updated.

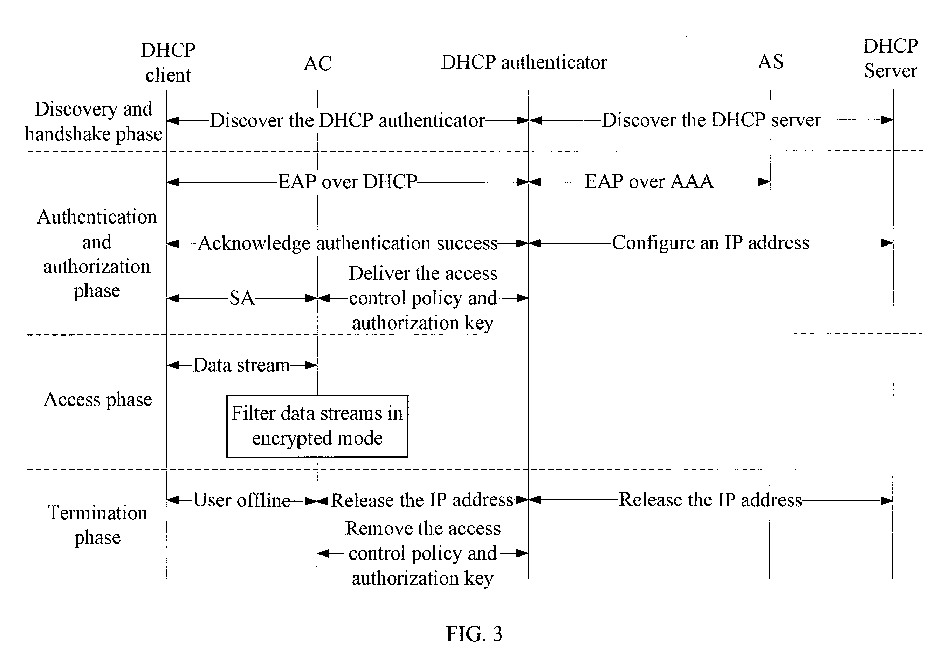

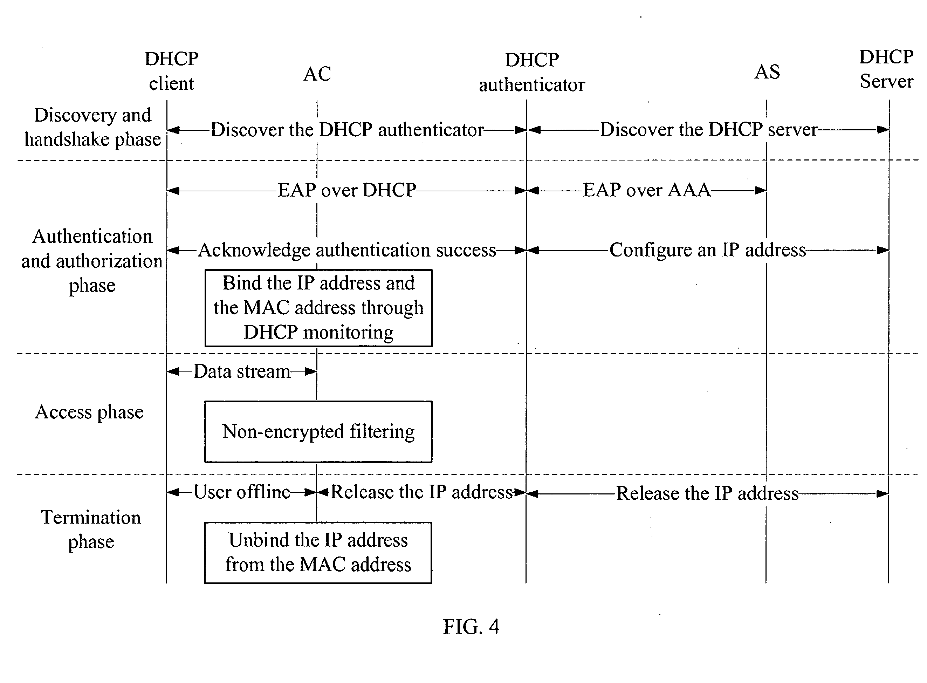

FIG. 3 and FIG. 4 show a lifecycle of an IP session during DHCP authentication. FIG. 3 shows a lifecycle of an IP session during which data streams are filtered in encrypted mode in the DHCP authentication process. FIG. 4 shows a lifecycle of an IP session during which data streams are filtered in non-encrypted mode in the DHCP authentication process. An IP session corresponding to a DHCP authentication process covers five phases:
(1) Discovery and handshake phase: A new IP session is initiated. The DHCP client may find a DHCP authenticator by broadcasting a request to specific DHCP authenticators. The DHCP authenticator starts a new session by sending a response.
(2) Authentication and authorization phase: After the discovery and handshake phase, authentication messages are transmitted between the DHCP authenticator and the DHCP client. The EAP carried in the DHCP messages carries various EAP authentication methods and is used to authenticate the DHCP client. In this phase, EAP authentication may be performed twice: one for the network access provider (NAP) and the other one for the Internet service provider (ISP). The DHCP authenticator transmits the authentication and authorization result to the DHCP client at the end of this phase.
(3) Access phase: After the authentication and authorization succeed, the DHCP client is allowed to access the network. The IP data transmitted and received by the client may be checked by the AC. In addition, the DHCP client and the DHCP authenticator may send IP session test data to check the time to live (TTL) of the IP session of the peer at any time in this phase.
(4) Re-authentication phase: During an IP session, EAP authentication is performed again to shift from the access phase to the re-authentication phase. After the re-authentication succeeds, the process goes back to the access phase, and the TTL of the current IP session is prolonged. Otherwise, the IP session is deleted. Re-authentication may be initiated by the DHCP authenticator or the DHCP client, or triggered by the DHCP authenticator.
(5) Termination phase: The DHCP client or the DHCP authenticator may send a Disconnect message, for example, a DHCP Release message, to terminate an IP session at any time, thus terminating the access service. If a connection is disconnected without a Disconnect message, the IP session may expire, or the IP session status detection may fail.

The whole DHCP authentication process is hereinafter described in detail with reference to the TTL of an IP session in FIG. 3 and FIG. 4. Due to selection of different network IP addresses, DHCPv4 and DHCPv6 are selected for IPv4 and IPv6 respectively. Table 2 describes the functions implemented by different combinations of DHCPv4 messages and DHCP options.

**Table 2**

| **DHCPv4 Message** | **EAP Message** | **Function Description** |
|---|---|---|
| DHCP Discover (auth-proto Option) | - | 1. This message is broadcast to request the IP addresses of the DHCP authenticator and DHCP server. The source IP address of this message is 0.0.0.0. |
| | | 2. This message indicates the authentication mode supported by the DHCP client. |
| | | It is sent from the DHCP client to the DHCP authenticator. |
| DHCP Offer (auth-proto Option) | - | 1. This message is an authentication response returned by each DHCP authenticator, and indicates the authentication mode supported by each DHCP authenticator. |
| | | 2. This message provides an IP address used by the DHCP client in the local network and other DHCP configuration information (such as subnet mask and default gateway) for the DHCP client. |
| | | It is sent from the DHCP authenticator to the DHCP client. |
| DHCP Request (auth-proto Option) | - | 1. This message carries the authentication mode supported and the IP address provided by the DHCP authenticator, indicating that the DHCP client has accepted the provided IP address and DHCP authenticator. |
| | | It is sent from the DHCP client to the DHCP authenticator. |
| DHCP Offer (auth-proto Option, EAP-Message Option) | EAP Request/Identi ty | 1. This message is an authentication response returned by each DHCP authenticator, and indicates the authentication mode supported by each DHCP authenticator. The auth-proto Option is optional. |
| | | 2. This message provides an IP address used by the DHCP client in the local network and other DHCP configuration information (such as subnet mask and default gateway) for the DHCP client. |
| | | 3. This message carries a corresponding EAP message. |
| | | It is sent from the DHCP authenticator to the DHCP client. |
| DHCP Request (EAP-Message Option) | EAP Request /Response | 1. This message carries the IP address provided by the DHCP authenticator, indicating that the DHCP client has accepted the provided IP address and DHCP authenticator. |
| | | 2. This message carries a corresponding EAP message. |
| | | It is sent from the DHCP client to the DHCP authenticator. |
| DHCP Inform (EAP-M essage Option) | EAP Request /Response | 1. This message carries the corresponding EAP message. It is used when the DHCP client has been configured with an IP address statically. |
| | | 2. It is sent from the DHCP client to the DHCP authenticator. |
| DHCP ACK (EAP-Message Option) | EAP Request /Response/ Success | 1. This message carries configurable network parameters such as a user's IP address (yiaddr). |
| | | 2. This message carries a corresponding EAP message. |
| | | It is sent from the DHCP authenticator to the DHCP client. |
| DHCPNACK (EAP-Message Option) | EAP Failure | This message carries a corresponding EAP message. |
| | | It is sent from the DHCP authenticator to the DHCP client. |
| DHCP Release | - | This message indicates that a user is offline, and that the corresponding session and IP address should be released. |
| | | It is sent from the DHCP client to the DHCP authenticator. |

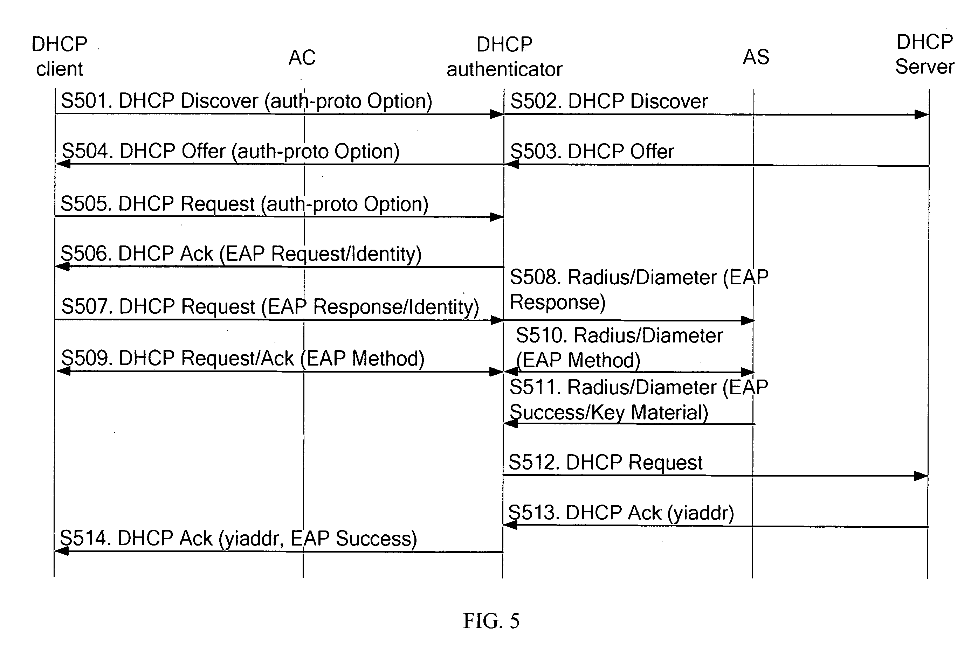

FIG. 5 is a first flowchart of initial successful DHCP authentication. The process includes the following steps:
Step S501: When connecting to the network, the DHCP client sends a DHCP Discover message to the network. This message indicates the DHCP authenticator and DHCP server involved in authentication and authorization. The auth-proto Option indicates the authentication mode supported by the DHCP client.
   If the AC and the DHCP authenticator belong to different physical layers, the AC forwards the DHCP Discover message to the corresponding DHCP authenticator.
Step S502: After receiving the DHCP Discover message, the DHCP authenticator forwards the message to the DHCP server.
Step S503: The DHCP server checks the parameters in the DHCP Discover message and returns a DHCP Offer message to provide an unleased IP address and other DHCP configuration information (such as subnet mask and default gateway) for the DHCP client.
Step S504: After receiving the DHCP Offer message, the DHCP authenticator adds the authentication mode supported by the DHCP authenticator to the auth-proto Option, records the unleased IP address provided by the DHCP server for the DHCP client, replaces the unleased IP address with an IP address used by the DHCP client in the local network, and then sends the DHCP Offer message to the DHCP client.
Step S505: After receiving the DHCP Offer message, the DHCP client has a temporary IP address and responds with a DHCP Request message to the DHCP authenticator. The DHCP Request message indicates that the DHCP client selects the DHCP authenticator and accepts the IP address provided by the DHCP authenticator. The selected DHCP authenticator supports the corresponding authentication mode.
Step S506: After receiving the DHCP Request message, the DHCP authenticator sends an EAP-Request/Identity message to the DHCP client and delivers a false lease that is for the DHCP client only. The EAP-Request/Identity message is carried in the DHCP ACK message. The false lease enables the DHCP client to respond to the EAP message quickly and reserves enough time for the DHCP authenticator to return an EAP authentication message to the DHCP client.
   It should be noted that during authentication, the DHCP authenticator, upon receiving a DHCP Request message, delivers a false lease for authentication of the DHCP client through the EAP message carried in the DHCP ACK message. After receiving the DHCP ACK message, the DHCP client resets the timers T1 and T2 according to the false lease. When the T1 or T2 expires, the DHCP Request message is retriggered to update the false lease so as to carry the time of sending the EAP message.
Step S507: After receiving the DHCP ACK message that carries the EAP-Request/Identity message, the DHCP client returns the received EAP-Request/Identity message to the DHCP authenticator through a DHCP Request message according to the T1 and T2 timers set by the false lease when the T1 timer expires. If the message cannot be returned before the T1 timer expires, it must be returned before the T2 timer expires.
Step S508: The DHCP authenticator sends an EAP Response message to the AS through the AAA protocol.
Step S509: The DHCP client and the DHCP authenticator interact with each other through the EAP messages carried in the DHCP Request and DHCP ACK messages.
Step S510: The DHCP authenticator and the AS interact with each other through the EAP messages carried in the AAA messages.
Step S509 and step S510: The EAP method negotiation and exchange are performed synchronously to check and verify the identity of the DHCP client. This process lasts until the EAP authentication ends.
Step S511: The AS notifies the DHCP authenticator of the authentication success.
   It should be noted that in steps S509, S510, and S511, if the DHCP authenticator and the AS are located in the same network node, they may exchange data through the API; if the DHCP authenticator and the AS are located in different network nodes, they exchange authentication data through AAA messages by using another protocol such as the RADIUS protocol or the Diameter protocol (the upgrade version of the RADIUS protocol).
Step S512: The DHCP authenticator constructs a DHCP Request message according to the recorded unleased IP address that is provided by the DHCP server for the DHCP client, and sends the message to the DHCP server.
Step S513: The DHCP server assigns a global IP address and a real lease to the DHCP client according to the parameters in the DHCP Request message constructed by the DHCP authenticator, and returns a DHCP ACK message to the DHCP authenticator. The DHCP ACK message carries the EAP Success message and the IP address (yiaddr) assigned to the user.
Step S514: After receiving the EAP Success message, the DHCP authenticator re-encapsulates the EAP Success message into a DHCP ACK message, and sends the message to the DHCP client. The DHCP ACK message carries the global IP address and the real lease assigned to the DHCP client.

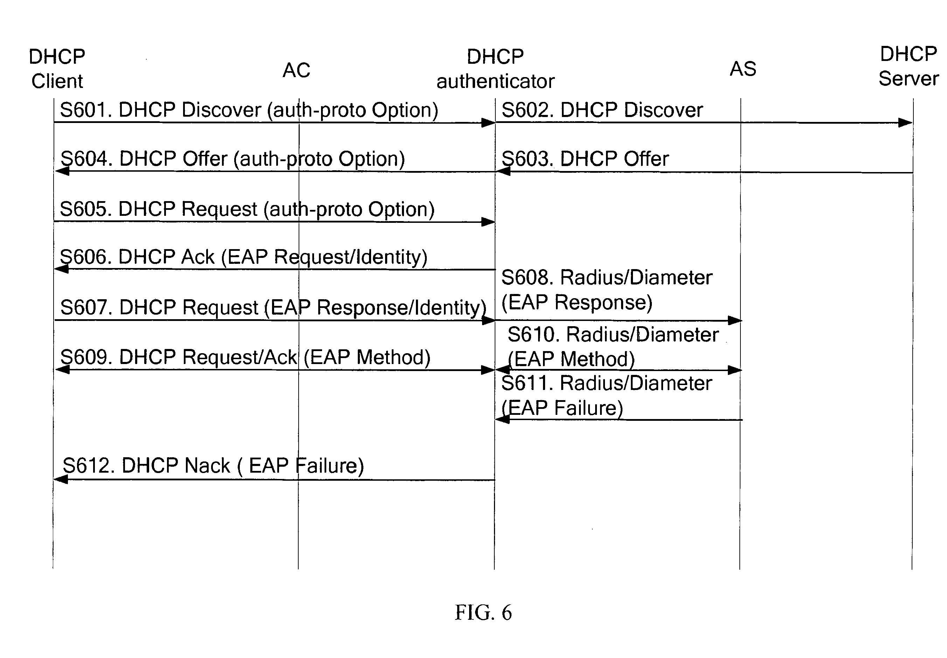

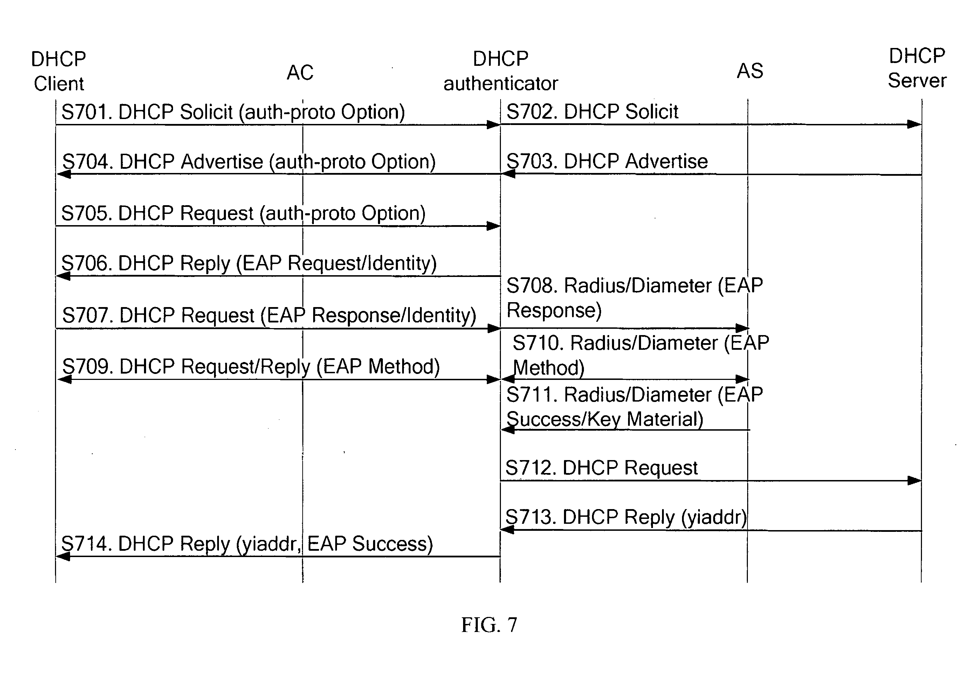

FIG. 5 is a flowchart of initial successful DHCPv4 authentication. The initial authentication may fail. The authentication process in which initial authentication fails is hereinafter described with reference to FIG. 6, Table 2, and FIG. 5. Steps S701 to S710 in FIG. 7 are the same as steps S501 to S510 in FIG. 5. The process after the AS authentication fails includes the following steps:
Step S611: After the authentication fails, the AS sends an AAA message carrying the EAP Failure message to the DHCP authenticator.
Step S612: After receiving the EAP Failure message, the DHCP authenticator sends a DHCP NACK message carrying the EAP Failure message to the DHCP client.

The DHCPv4 authentication process is described above. The following describes the DHCPv6 authentication process. Table 3 describes the functions implemented by different combinations of DHCPv6 messages and DHCP options.

**Table 3**

| **DHCPv6 Message** | **EAP Message** | **Function Description** |
|---|---|---|
| DHCP Solicit (auth-proto Option) | - | 1. This message is broadcast to request the IP addresses of the DHCP authenticator and DHCP server. The source IP address of this message is 0.0.0.0. |
| | | 2. This message indicates the authentication mode supported by the DHCP client. |
| | | It is sent from the DHCP client to the DHCP authenticator. |
| DHCP Advertise (auth-proto Option) | - | 1. This message is an authentication response returned by each DHCP authenticator, and indicates the authentication mode supported by each DHCP authenticator. |
| | | 2. This message provides an IP address used by the DHCP client in the local network and other DHCP configuration information (such as subnet mask and default gateway) for the DHCP client. |
| | | It is sent from the DHCP authenticator to the DHCP client. |
| DHCP Request (auth-proto Option) | - | 1. This message carries the authentication mode supported and the IP address provided by the DHCP authenticator, indicating that the DHCP client has accepted the provided IP address and DHCP authenticator. |
| | | It is sent from the DHCP client to the DHCP authenticator. |
| DHCP Advertise (auth-proto Option, EAP-Message Option) | EAP Request/Identity | 1. This message is an authentication response returned by each DHCP authenticator, and indicates the authentication mode supported by each DHCP authenticator. The auth-proto Option is optional. |
| | | 2. This message provides an IP address used by the DHCP client in the local network and other DHCP configuration (such as subnet mask and default gateway) for the DHCP client. |
| | | 3. This message carries a corresponding EAP message. |
| | | It is sent from the DHCP authenticator to the DHCP client. |
| DHCP Request (EAP-Message Option) | EAP Request /Response | 1. This message carries the IP address provided by the DHCP authenticator, indicating that the DHCP client has accepted the provided IP address and DHCP authenticator. |
| | | 2. This message carries a corresponding EAP message. |
| | | It is sent from the DHCP client to the DHCP authenticator. |
| DHCP Reply (EAP-Message Option) | EAP Request /Response/ Success/Failure | 1. This message carries configurable network parameters such as a user's IP address. |
| | | 2. This message carries a corresponding EAP message. |
| | | It is sent from the DHCP authenticator to the DHCP client. |
| DHCP Release | - | This message indicates that a user is offline, and that the corresponding session and IP address should be released. |
| | | It is sent from the DHCP client to the DHCP authenticator. |

The DHCPv6 authentication process is described with reference to Table 3 and FIG. 7.
Step S701: When connecting to the network, the DHCP client sends a DHCP Solicit message to the network. This message indicates the DHCP authenticator and DHCP server involved in authentication and authorization. The auth-proto Option indicates the authentication mode supported by the DHCP client.
   If the AC and the DHCP authenticator belong to different physical layers, the AC forwards the DHCP Solicit message to the corresponding DHCP authenticator.
Step S702: After receiving the DHCP Solicit message, the DHCP authenticator forwards the message to the DHCP server.
Step S703: The DHCP server checks the parameters in the DHCP Solicit message and returns a DHCP Advertise message to provide an unleased IP address and other DHCP configuration information (such as subnet mask and default gateway) for the DHCP client.
Step S704: After receiving the DHCP Advertise message, the DHCP authenticator adds the authentication mode supported by the DHCP authenticator in the auth-proto Option, records the unleased IP address provided by the DHCP server for the DHCP client, replaces the unleased IP address with an IP address used by the client in the local network, and then sends the DHCP Advertise message to the DHCP client.
Step S705: After receiving the DHCP Advertise message, the DHCP client obtains a temporary IP address from the message. The DHCP client responds with a DHCP Request message. The DHCP Request message indicates that the DHCP client selects the DHCP authenticator and accepts the IP address provided by the DHCP authenticator. The selected DHCP authenticator supports the corresponding authentication mode.
Step S706: After receiving the DHCP Request message, the DHCP authenticator sends an EAP-Request/Identity message to the DHCP client and delivers a false lease that is for the DHCP client only. The EAP-Request/Identity message is carried in the DHCP Reply message. The false lease enables the DHCP client to respond to the EAP message quickly and reserves enough time for the DHCP authenticator to return an EAP authentication message to the DHCP client.
Step S707: After receiving the DHCP Reply message carrying the EAP-Request/Identity message, the DHCP client returns the EAP-Response/Identity message to the DHCP authenticator, indicating that the EAP-Request/Identity message is received. The EAP-Request/Identity message is carried in a DHCP Request message.
Step S708: The DHCP authenticator sends an EAP Response message to the AS through the AAA protocol.
Step S709: The DHCP client and the DHCP authenticator exchange EAP messages. The EAP messages are carried in the DHCP Request/Reply messages.
Step S710: The DHCP authenticator and the AS exchange EAP messages. The EAP messages are carried in the AAA messages.
   In step S709 and step S710, the EAP method negotiation and exchange are performed synchronously to check and verify the identity of the DHCP client. This process lasts until the EAP authentication ends.
Step S711: The AS notifies the DHCP authenticator of the authentication success.
Step S712: The DHCP authenticator constructs a DHCP Request message according to the recorded unleased IP address that is provided by the DHCP server for the DHCP client, and sends the message to the DHCP server.
Step S713: The DHCP server assigns a global IP address and a real lease to the DHCP client according to the parameters in the DHCP Request message constructed by the DHCP authenticator, and returns a DHCP Reply message to the DHCP authenticator. The DHCP Reply message carries the EAP Success message.
Step S714: After receiving the EAP Success message, the DHCP authenticator re-encapsulates the EAP Success message into a DHCP Reply message, and sends the message to the DHCP client. The DHCP Reply message carries the global IP address and the real lease assigned to the DHCP client.

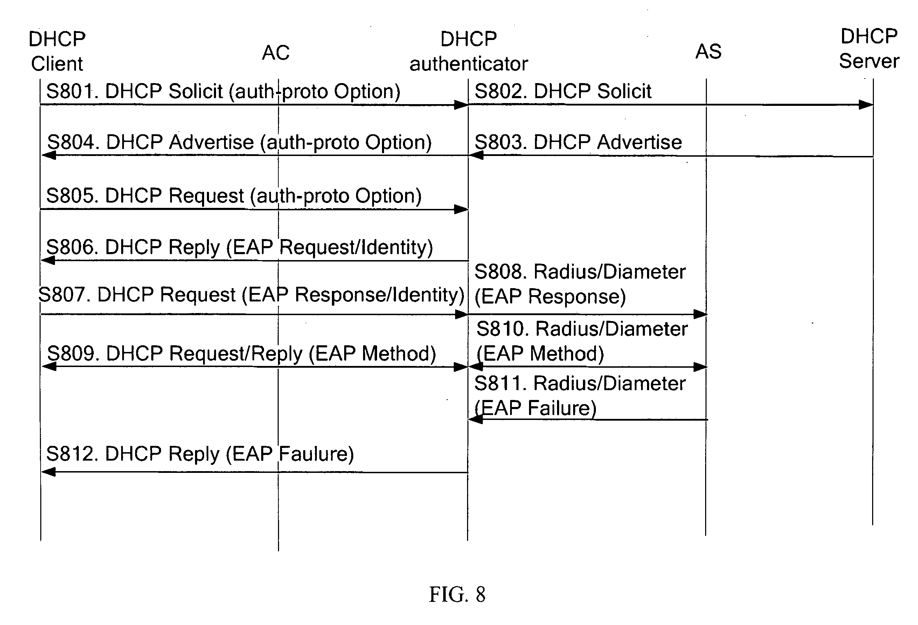

FIG. 7 is a flowchart of initial successful DHCPv6 authentication. The initial authentication may fail. The authentication process in which initial authentication fails is hereinafter described with reference to FIG. 8, Table 3, and FIG. 7. Steps S801 to S810 in FIG. 8 are the same as steps S701 to S710 in FIG. 7. The following describes the steps after the AS authentication fails:
Step S8011: After the authentication fails, the AS sends an AAA message carrying the EAP Failure message to the DHCP authenticator.
Step S8012: After receiving the EAP Failure message, the DHCP authenticator sends a DHCP Reply message carrying the EAP Failure message to the DHCP client.

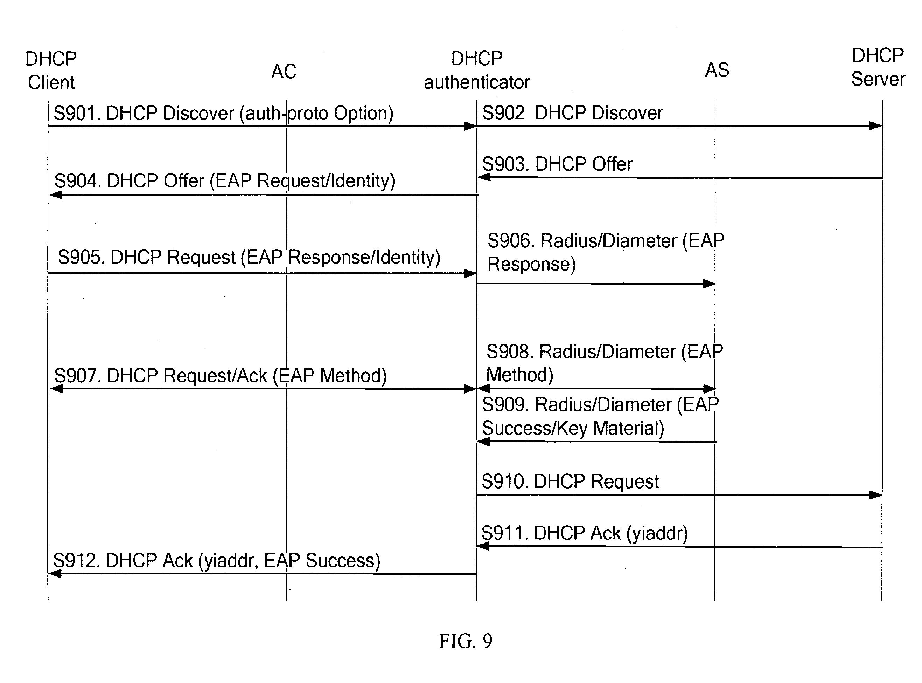

According to an embodiment of the present invention, the initial authentication process may be simplified according to actual requirements. FIG. 9 shows the simplified initial authentication process in the discovery phase according to FIG. 5 and Table 2. The steps S901 to S903 are the same as steps S501 to S503 in FIG. 5. In step S904, after receiving the DHCP Offer message, the DHCP authenticator directly adds the EAP-Request/Identity message in a DHCP Offer message, records the unleased IP address provided by the DHCP server for the DHCP client, replaces the unleased IP address with an IP address used by the DHCP client in the local network, and sends the DHCP Offer message to the DHCP client. Then the process proceeds to the steps S905 to S912, which are the same as the steps S507 to S514 in FIG. 5.

As shown in FIG. 6, the process directly goes to step S608 to start authentication after the DHCP authenticator sends a DHCP Offer message carrying the EAP-Request/Identity message to the DHCP client in step S604. Similarly, the process directly goes to step S708 or S808 to start authentication after the DHCP authenticator sends a DHCP Advertise message carrying the EAP-Request/Identity message to the DHCP client in step S704 or S804.

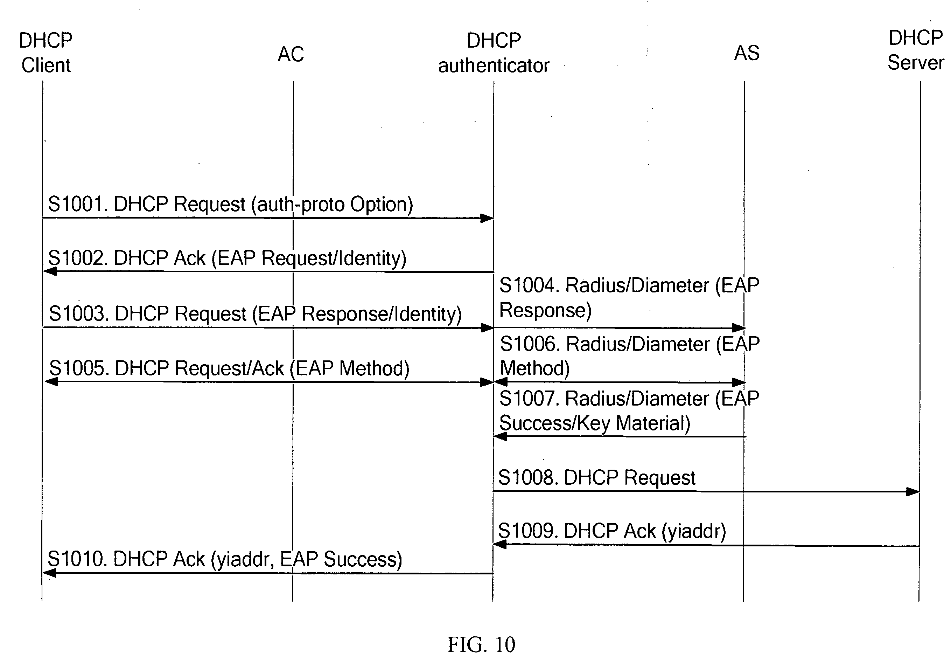

After the DHCP client passes the authentication, upon expiry of the IP session lease, re-authentication needs to be performed to reassign an IP address to the DHCP client so as to prolong the IP session time. The re-authentication process omits the discovery phase and directly proceeds to the handshake phase. The re-authentication process is hereinafter described with reference to Table 2 and FIG. 10. In step S1001, when the lease expires, the DHCP client directly sends a DHCP Request message within the preset time. The DHCP Request message carries the authentication mode supported and the IP address provided by the DHCP authenticator, indicating that the DHCP selects the DHCP authenticator and accepts the IP address provided by the DHCP authenticator. The selected DHCP authenticator supports the corresponding authentication mode. In step S1002, after receiving the DHCP Request message, the authenticator performs a step same as step S508 in FIG. 5. The steps S1002 to S1010 are the same as steps S506 to S514. Similarly, re-authentication may fail. After the re-authentication fails, the DHCP authenticator may re-authenticate the DHCP client according to the configuration parameters of the DHCP client until the re-authentication succeeds. FIG. 10 shows a re-authentication method. Details are omitted here.

The DHCPv6 messages listed in Table 3 for re-authentication after the DHCP authentication succeeds are similar to the DHCPv4 messages for re-authentication, but the DHCP messages used for authentication are different.

The foregoing method implements different functions by different combinations of original DHCPv4 or DHCPv6 messages and two new DHCP options. Also, an embodiment of the present invention implements DHCP authentication through combinations of new DHCP messages and new DHCP options. Table 4 describes the functions implemented by different combinations of DHCPv4 messages and DHCP options. Table 5 describes the functions implemented by different combinations of DHCPv6 messages and DHCP options.

**Table 4**

| **DHCPv4 Message** | **EAP Message** | **Function Description** |
|---|---|---|
| DHCP Discover (auth-proto Option) | - | 1. This message is broadcast to request the IP addresses of the DHCP authenticator and DHCP server. The source IP address of this message is 0.0.0.0. |
| | | 2. This message indicates the authentication mode supported by the DHCP client. |
| | | It is sent from the DHCP client to the DHCP authenticator. |
| DHCP Offer (auth-proto Option) | - | 1. This message is an authentication response returned by each DHCP authenticator, and indicates the authentication mode supported by each DHCP authenticator. |
| | | 2. This message provides an IP address used by the DHCP client in the local network and other DHCP configuration information (such as subnet mask and default gateway) for the DHCP client. |
| | | It is sent from the DHCP authenticator to the DHCP client. |
| DHCP Request (auth-proto Option) | - | 1. This message carries the authentication mode supported and the IP address provided by the DHCP authenticator, indicating that the DHCP client has accepted the provided IP address and DHCP authenticator. |
| | | It is sent from the DHCP client to the DHCP authenticator. |
| DHCP Offer (auth-proto Option, EAP-Message Option) | EAP Request/Identity | 1. This message is an authentication response returned by each DHCP authenticator, and indicates the authentication mode supported by each DHCP authenticator. The auth-proto Option is optional. |
| | | 2. This message provides an IP address used by the DHCP client in the local network and other DHCP configuration information (such as subnet mask and default gateway) for the DHCP client. |
| | | 3. This message carries a corresponding EAP message. |
| | | It is sent from the DHCP authenticator to the DHCP client. |
| DHCP Auth-response (EAP-Message Option)/DHCP EAP (EAP-Message Option) | EAP Request /Response | This message carries a corresponding EAP message. |
| | | It is sent from the DHCP client to the DHCP authenticator. |
| DHCP Auth-request (EAP-Message Option) /DHCP EAP (EAP-Message Option) | EAP Request /Response | This message carries a corresponding EAP message. |
| | | It is sent from the DHCP authenticator to the DHCP client. |
| DHCP ACK (EAP-Message Option) | EAP Success | 1. This message carries configurable network parameters such as a user's IP address. |
| | | 2. This message carries a corresponding EAP message. |
| | | It is sent from the DHCP authenticator to the DHCP client. |
| DHCP NACK (EAP-Message Option) | EAP Failure | This message carries a corresponding EAP message. |
| | | It is sent from the DHCP authenticator to the DHCP client. |
| DHCP Release | - | This message indicates that a user is offline, and that the corresponding session and IP address should be released. |
| | | It is sent from the DHCP client to the DHCP authenticator. |

**Table 5**

| **DHCPv6 Message** | **EAP Message** | **Function Description** |
|---|---|---|
| DHCP Solicit (auth-proto Option) | - | 1. This message is broadcast to request the IP addresses of the DHCP authenticator and DHCP server. The source IP address of this message is 0.0.0.0. |
| | | 2. This message indicates the authentication mode supported by the DHCP client. |
| | | It is sent from the DHCP client to the DHCP authenticator. |
| DHCP Advertise (auth-proto Option) | - | 1. This message is an authentication response returned by each DHCP authenticator, and indicates the authentication mode supported by each DHCP authenticator. |
| | | 2. This message provides an IP address used by the DHCP client in the local network and other DHCP configuration information (such as subnet mask and default gateway) for the DHCP client. |
| | | It is sent from the DHCP authenticator to the DHCP client. |
| DHCP Request (auth-proto Option) | - | 1. This message carries the authentication mode supported and the IP address provided by the DHCP authenticator, indicating that the DHCP client has accepted the provided IP address and DHCP authenticator. |
| | | It is sent from the DHCP client to the DHCP authenticator. |
| DHCP Advertise (auth-proto Option, EAP-Message Option) | EAP Request/Identity | 1. This message is an authentication response returned by each DHCP authenticator, and indicates the authentication mode supported by each DHCP authenticator. The auth-proto Option is optional. |
| | | 2. This message provides an IP address used by the DHCP client in the local network and other DHCP configuration information (such as subnet mask and default gateway) for the DHCP client. |
| | | 3. This message carries a corresponding EAP message. |
| | | It is sent from the DHCP authenticator to the DHCP client. |
| DHCP Auth-response (EAP-Message Option) /DHCP EAP (EAP-Message Option) | EAP Request /Response | This message carries a corresponding EAP message. |
| | | It is sent from the DHCP client to the DHCP authenticator. |
| DHCP Auth-request (EAP-Message Option) /DHCP EAP (EAP-Message Option) | EAP Request /Response | This message carries a corresponding EAP message. |
| | | It is sent from the DHCP authenticator to the DHCP client. |
| DHCP Reply (EAP-Message Option) | EAP Success/Failure | 1. This message carries configurable network parameters such as a user's IP address. |
| | | 2. This message carries a corresponding EAP message. |
| | | It is sent from the DHCP authenticator to the DHCP client. |
| DHCP Release | - | This message indicates that a user is offline, and that the corresponding session and IP address should be released. |
| | | It is sent from the DHCP client to the DHCP authenticator. |

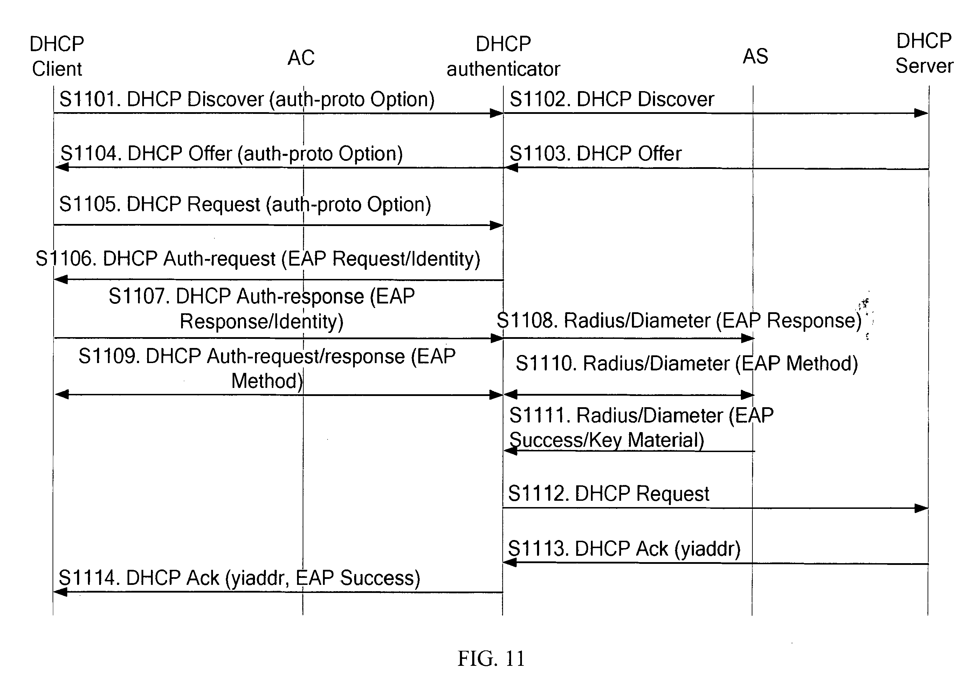

FIG. 11 is a flowchart of DHCP authentication through the new DHCPv4 messages and DHCP options in Table 4 according to the prior art. Steps S1101 to S1105 are the same as steps S501 to S505 in FIG. 5. The subsequent steps are as follows:
Step S1106: After receiving the DHCP Request message, the DHCP authenticator sends an EAP-Request/Identity message to the DHCP client. The EAP-Request/Identity message is carried in a DHCP Auth-request message or a DHCP EAP message.
Step S 1107: After receiving the DHCP Auth-request or DHCP EAP message carrying the EAP-Request/Identity message, the DHCP client returns the EAP-Request/Identity message to the DHCP authenticator. The EAP-Request/Identity message is carried in a DHCP Auth-response message or a DHCP EAP message.
Step S 1108: After receiving the EAP-Response/Identity message, the DHCP authenticator re-encapsulates the EAP-Response message into an AAA message and sends the message to the AS.
Step S1109: The DHCP client and the DHCP authenticator exchange EAP messages. The EAP messages exchanged between the DHCP client and the DHCP authenticator are carried in the DHCP Auth-request/response or DHCP EAP messages.
Step S1110: The DHCP authenticator and the AS exchange EAP messages. The EAP messages are carried in the AAA messages.
   In step S 1109 and step S1110, the EAP method negotiation and exchange are performed synchronously to check and verify the identity of the DHCP client. This process lasts until the EAP authentication ends.
Step S1111: The AS notifies the DHCP authenticator of the authentication success.
Step S1112: The DHCP authenticator constructs a DHCP Request message according to the recorded unleased IP address that is provided by the DHCP server for the DHCP client, and sends the message to the DHCP server.
Step S 1113: The DHCP server assigns a global IP address and a real lease to the DHCP client according to the parameters in the DHCP Request message constructed by the DHCP authenticator, and returns a DHCP ACK message to the DHCP authenticator. The DHCP ACK message carries the EAP Success message and the IP address (yiaddr) assigned to the user.
Step S1114: After receiving the EAP Success message, the DHCP authenticator re-encapsulates the EAP Success message into a DHCP ACK message, and sends the message to the DHCP client. The DHCP ACK message carries the global IP address and the real lease assigned to the DHCP client.

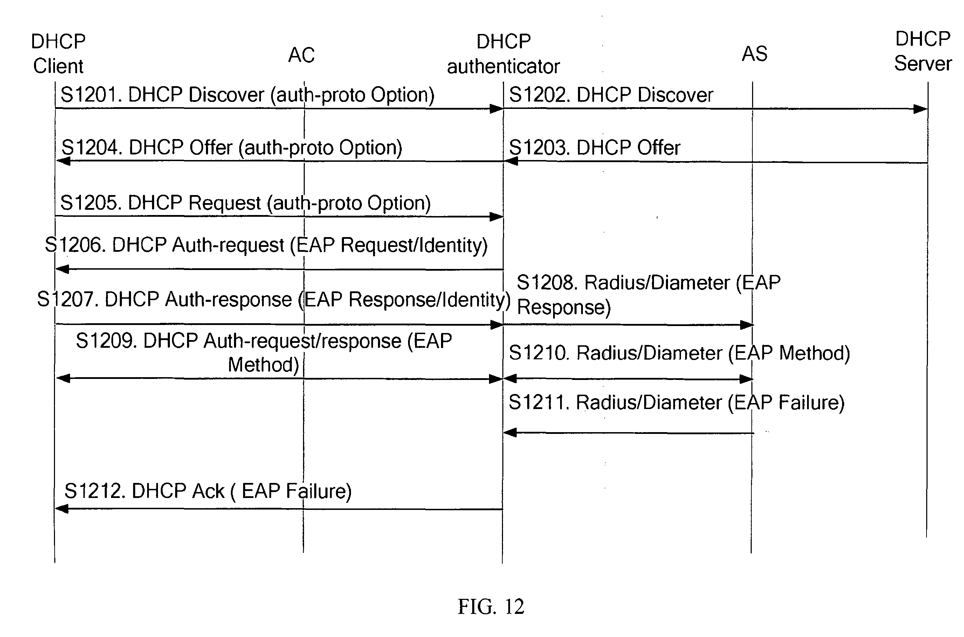

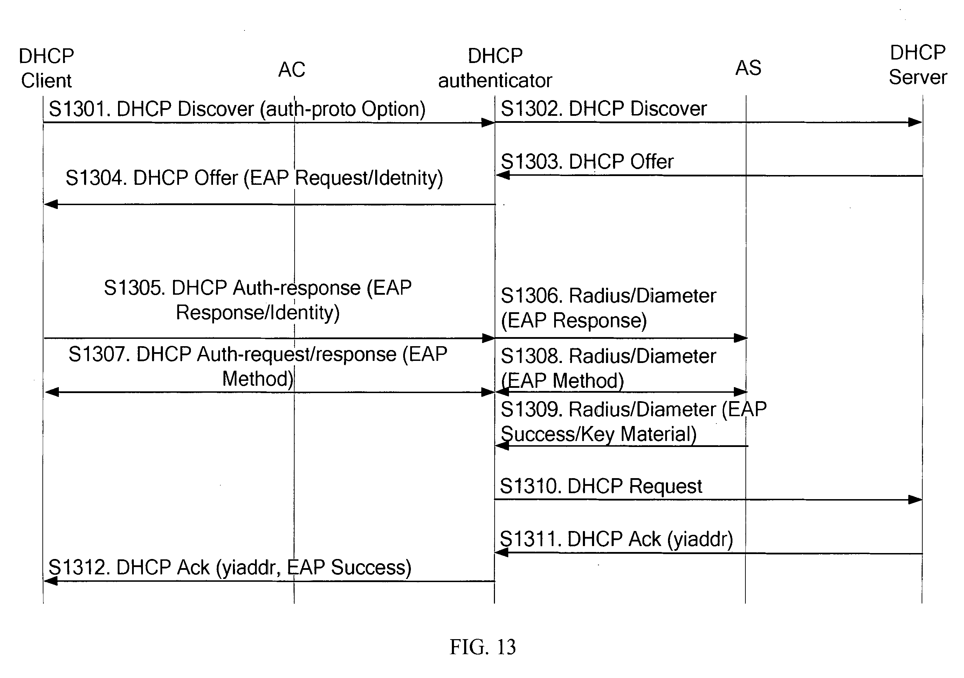

The EAP message and DHCP Option message are carried in the DHCP Auth-response and DHCP Auth-request messages or DHCP EAP messages. FIG. 12 is a flowchart of DHCP authentication in which the authentication fails. FIG. 13 is, as an example, a simplified authentication flowchart. Details are omitted.

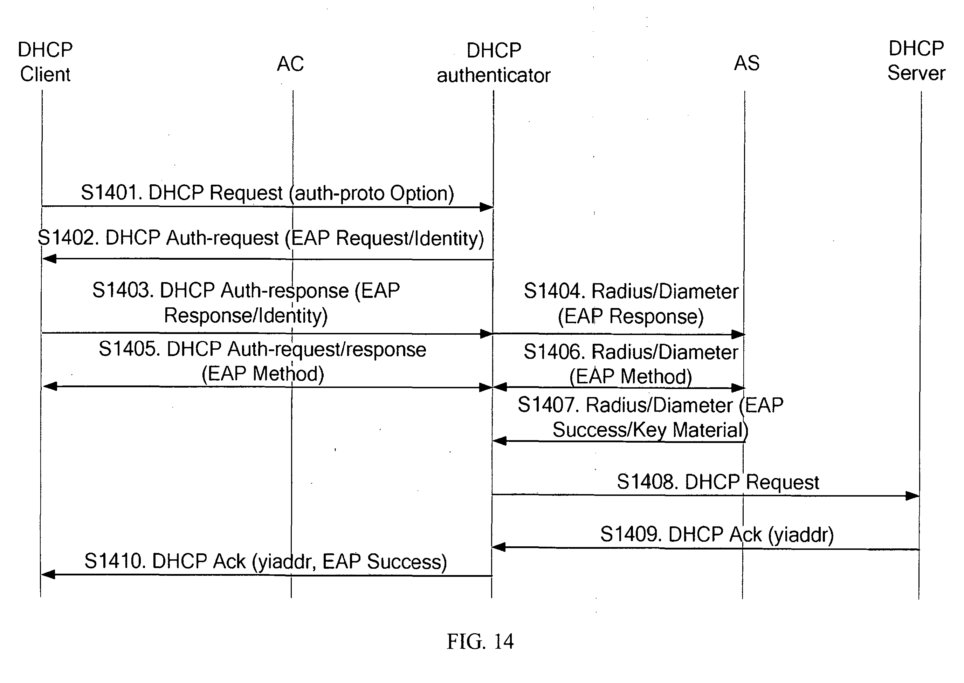

When the EAP message and DHCP Option message are carried in the DHCP Auth-response and DHCP Auth-request messages or the DHCP EAP messages, the DHCP client or the DHCP authenticator may trigger the re-authentication process after the authentication succeeds. FIG. 14 is a flowchart of re-authentication triggered by the DHCP client. In step S1401, the client directly sends a DHCP Request message. The DHCP Request message carries the authentication mode supported and the IP address provided by the DHCP authenticator, and indicates that the DHCP client selects the DHCP authenticator and accepts the IP address provided by the DHCP authenticator. The selected DHCP authenticator supports the authentication mode. In step S1402, after receiving the DHCP Request message, the authenticator performs identity authentication.

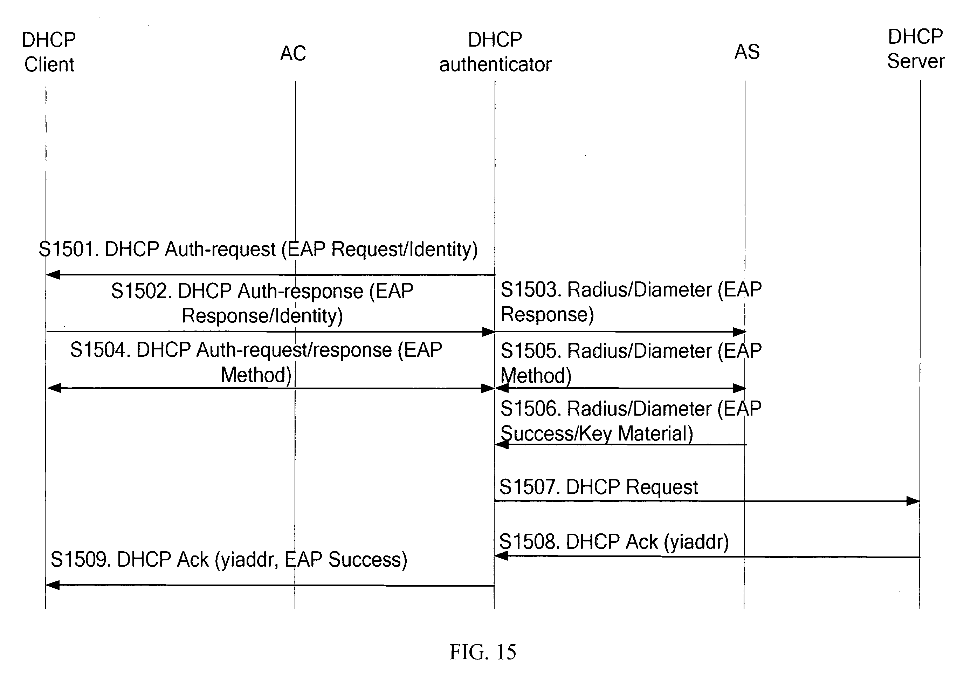

FIG. 15 is a flowchart of authentication triggered by the client. In step S1501, after the DHCP authentication succeeds, the authenticator sends an authentication request to the DHCP client to trigger re-authentication.

The authentication process through the new DHCPv4 messages and DHCP options is described above. Similarly, the authentication may be performed through the new DHCPv6 messages and DHCP options described in Table 5.

In addition, an example implements DHCP authentication by different combinations of DHCPv4/DHCPv6 messages and DHCP options. Table 6 describes the functions implemented by different combinations of DHCPv4 messages and DHCP options. Table 7 describes the functions implemented by different combinations of DHCPv6 messages and DHCP options.

| **DHCPv4 Message** | **EAP Message** | **Function Description** |
|---|---|---|
| DHCP Discover (auth-proto Option) | - | 1. This message is broadcast to request the IP addresses of the DHCP authenticator and DHCP server. The source IP address of this message is 0.0.0.0. |
| | | 2. This message indicates the authentication mode supported by the DHCP client. |
| | | It is sent from the DHCP client to the DHCP authenticator. |
| DHCP Auth-response (EAP-Message Option)/DHCP EAP(EAP-Message Option) | EAP Request /Response | This message carries a corresponding EAP message. |
| | | It is sent from the DHCP client to the DHCP authenticator. |
| DHCP Auth-request (EAP-Message Option)/DHCP EAP(EAP-Message Option) | EAP Request /Response | This message carries a corresponding EAP message. |
| | | It is sent from the DHCP authenticator to the DHCP client. |
| DHCP Offer (EAP-Message Option) | EAP Success/ EAP Failure | 1. This message provides an unleased IP address and other DHCP configuration information (such as subnet mask and default gateway) for the DHCP client. |
| | | 2. This message carries a corresponding EAP message. |
| | | It is sent from the DHCP authenticator to the DHCP client. |
| DHCP NACK (EAP-Message Option) | EAP Failure | This message carries a corresponding EAP message. |
| | | It is sent from the DHCP authenticator to the DHCP client. |
| DHCP Release | - | This message indicates that a user is offline, and that the corresponding session and IP address should be released. |
| | | It is sent from the DHCP client to the DHCP authenticator. |

| **DHCPv6 Message** | **EAP Message** | **Function Description** |
|---|---|---|
| DHCP Solicit (auth-proto Option) | - | 1. This message is broadcast to request the IP addresses of the DHCP authenticator and DHCP server. The source IP address of this message is 0.0.0.0. |
| | | 2. This message indicates the authentication mode supported by the DHCP client. |
| | | It is sent from the DHCP client to the DHCP authenticator. |
| DHCP Auth-response (EAP-Message Option)/DHCP EAP(EAP-Message Option) | EAP Request /Response | This message carries a corresponding EAP message. |
| | | It is sent from the DHCP client to the DHCP authenticator. |
| DHCP Auth-request (EAP-Message Option)/DHCP EAP(EAP-Message Option) | EAP Request /Response | This message carries a corresponding EAP message. |
| | | It is sent from the DHCP authenticator to the DHCP client. |
| DHCP Advertise (EAP-Message Option) | EAP Success/ EAP Failure | 1. This message provides an unleased IP address and other DHCP configuration information (such as subnet mask and default gateway) for the DHCP client. |
| | | 2. This message carries a corresponding EAP message. |
| | | It is sent from the DHCP authenticator to the DHCP client. |
| | | |
| DHCP Reply (EAP-Message Option) | EAP Failure | 1. This message carries configurable network parameters such as a user's IP address. |
| | | 2. This message carries a corresponding EAP message. |
| | | It is sent from the DHCP authenticator to the DHCP client. |
| DHCP Release | - | This message indicates that a user is offline, and that the corresponding session and IP address should be released. |
| | | It is sent from the DHCP client to the DHCP authenticator. |

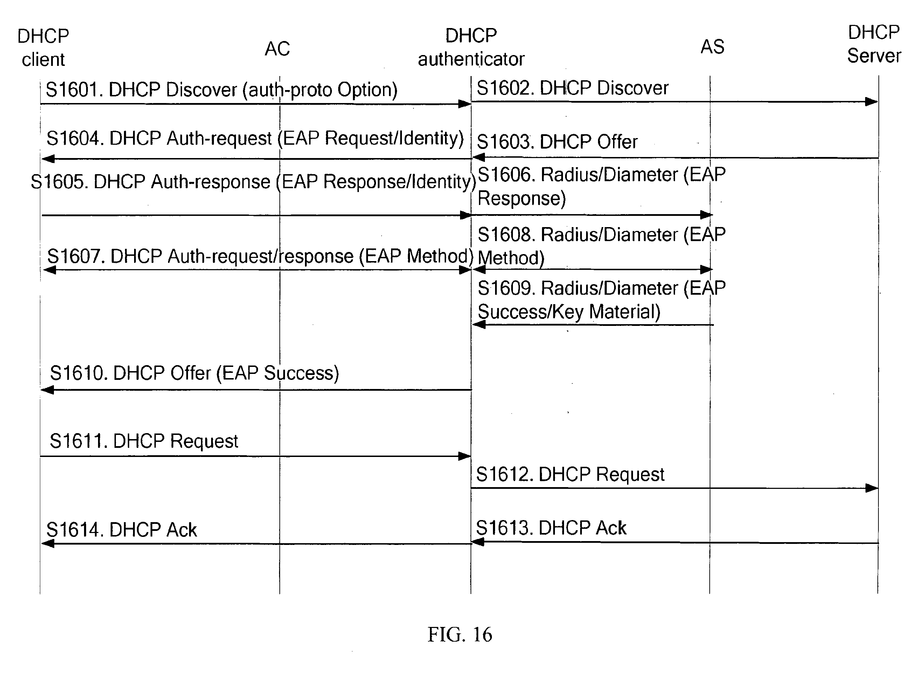

FIG. 16 is a flowchart of DHCP authentication through the new DHCPv4 messages and DHCP options listed in Table 6 according to the prior art. The process includes the following steps:
Step S1601: When connecting to the network, the DHCP client sends a DHCP Discover message to the network. This message indicates the DHCP authenticator and DHCP server involved in authentication and authorization. The auth-proto Option indicates the authentication mode supported by the DHCP client.
   If the AC and the DHCP authenticator belong to different physical entities, the AC forwards the DHCP Discover message to the corresponding DHCP authenticator.
Step S1602: After receiving the DHCP Discover message, the DHCP authenticator forwards the message to the DHCP server.
Step S1603: The DHCP server checks the parameters in the DHCP Discover message and returns a DHCP Offer message to provide an unleased IP address and other DHCP configuration information (such as subnet mask and default gateway) for the DHCP client.
Step S1604: The DHCP authenticator sends an EAP-Request/Identity message to the DHCP client through a DHCP Auth-request message or a DHCP EAP message.
Step S1605: After receiving the DHCP Auth-request message or the DHCP EAP message, the DHCP client returns the EAP-Response/Identity message to the DHCP authenticator through a DHCP Auth-response message or a DHCP EAP message.
Step S1606: The DHCP authenticator forwards the received EAP-Response/Identity message to the AS through an EAP Response message over the AAA protocol.
Step S1607 and step S1608: The EAP method negotiation and exchange are performed. In these processes, the EAP messages exchanged between the DHCP client and the DHCP authenticator are carried in the DHCP Auth-request/response or DHCP EAP messages; the EAP messages exchanged between the DHCP authenticator and the AS are carried in the AAA messages. These processes last until the EAP authentication ends.
Step S1609: The AS notifies the DHCP authenticator of the authentication success.
Step S1610: After receiving the EAP Success message, the DHCP authenticator encapsulates the message into a DHCP Offer message and forwards the message to the DHCP client.
Steps S1611 to S1614 are the process of requesting a standard DHCP address in the prior art.

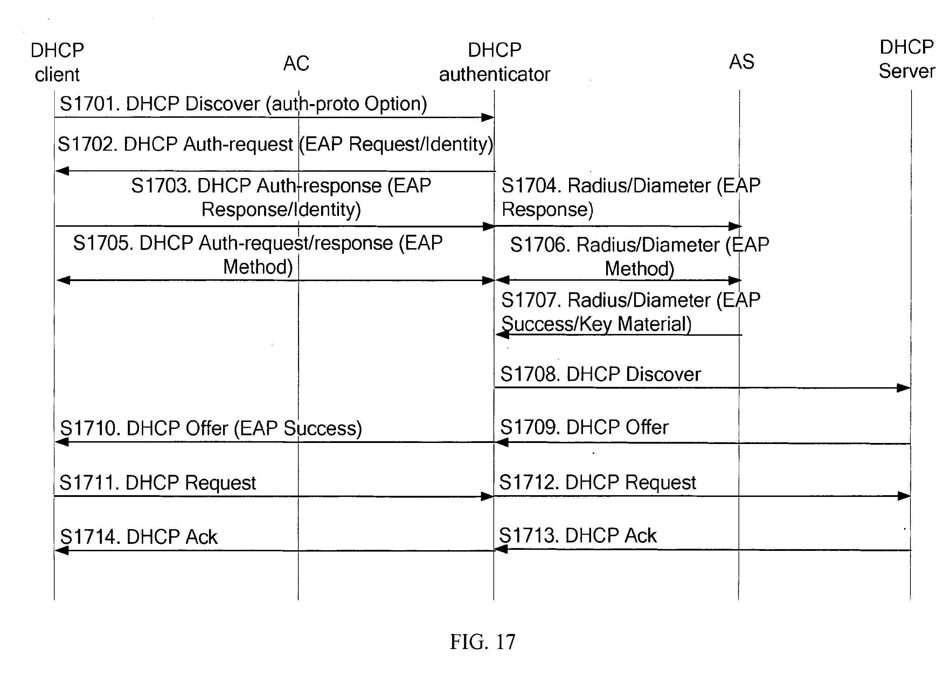

FIG. 17 is another flowchart of DHCP authentication through the new DHCPv4 messages and HDCP options listed in Table 6 according to the prior art. The process includes the following steps:
Step S1701: When connecting to the network, the DHCP client sends a DHCP Discover message to the network. This message indicates the DHCP authenticator involved in authentication. The auth-proto Option indicates the authentication mode supported by the DHCP client.
Step S1702: The DHCP authenticator sends an EAP-Request/Identity message to the DHCP client to provide an unleased IP address for the DHCP client. The DHCP server may also provide other DHCP configuration information such as subnet mask and default gateway for the DHCP client. The EAP-Request/Identity message is carried in a DHCP Auth-request message or a DHCP EAP message.
Step S 1703: After receiving the DHCP Auth-request message or the DHCP EAP message, the DHCP client returns the EAP-Response/Identity message to the DHCP authenticator. The EAP-Response/Identity message is carried in a DHCP Auth-response message or a DHCP EAP message.
Step S1704: The DHCP authenticator forwards the received EAP-Response/Identity message to the AS over the AAA protocol.
Step S1705 and step S1706: The EAP method negotiation and exchange are performed. In these processes, the EAP messages exchanged between the DHCP client and the DHCP authenticator are carried in the DHCP Auth-request/response or DHCP EAP messages; the EAP messages exchanged between the DHCP authenticator and the AS are carried in the AAA messages. These processes last until the EAP authentication ends.
Step S1707: The AS notifies the DHCP authenticator of the authentication success.
Step S1708: The DHCP authenticator forwards the received DHCP Discover message to the DHCP server.
Step S 1709: The DHCP server checks the parameters in the DHCP Discover message and returns a DHCP Offer message to provide an unleased IP address for the DHCP client. The DHCP server may also provide other DHCP configuration information (such as subnet mask and default gateway) for the DHCP client.
Step S 1710: After receiving the DHCP Offer message, the DHCP authenticator encapsulates the EAP Success message into the DHCP Offer message and forwards the message to the DHCP client.
Steps S 1711 to S 1714 are the process of requesting a standard DHCP address in the prior art.

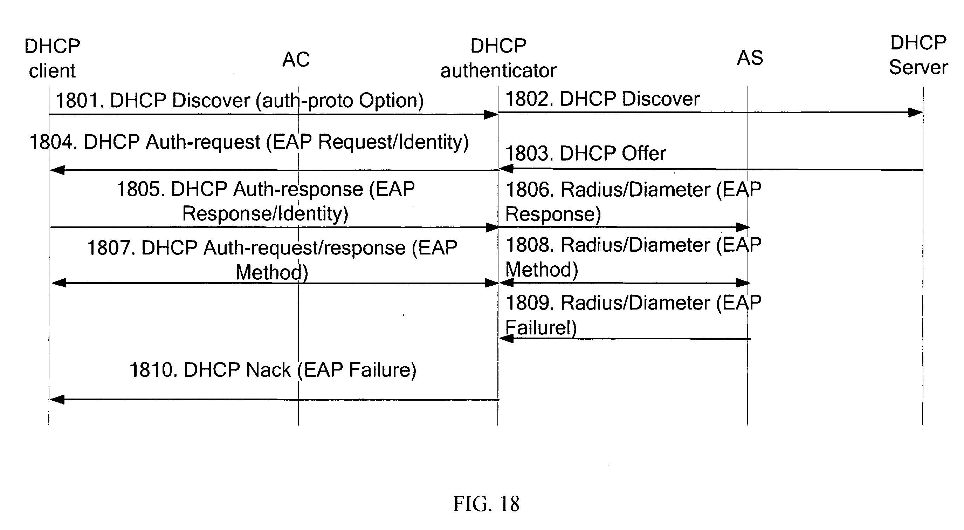

FIG. 18 is a flowchart of initial unsuccessful DHCP authentication through the new DHCPv4 messages and DHCP options listed in Table 6. The initial DHCP authentication process described in steps S 1801 to S 1808 is the same as that described in steps S 1601 to S1608. The process after the AS authentication fails includes the following steps:
Step S1809: The DHCP authenticator receives an EAP Failure message sent by the AS.
Step S1810: The DHCP authenticator re-encapsulates the EAP Failure message into a DHCP NACK message or a DHCP Offer message, and forwards the message to the DHCP client.

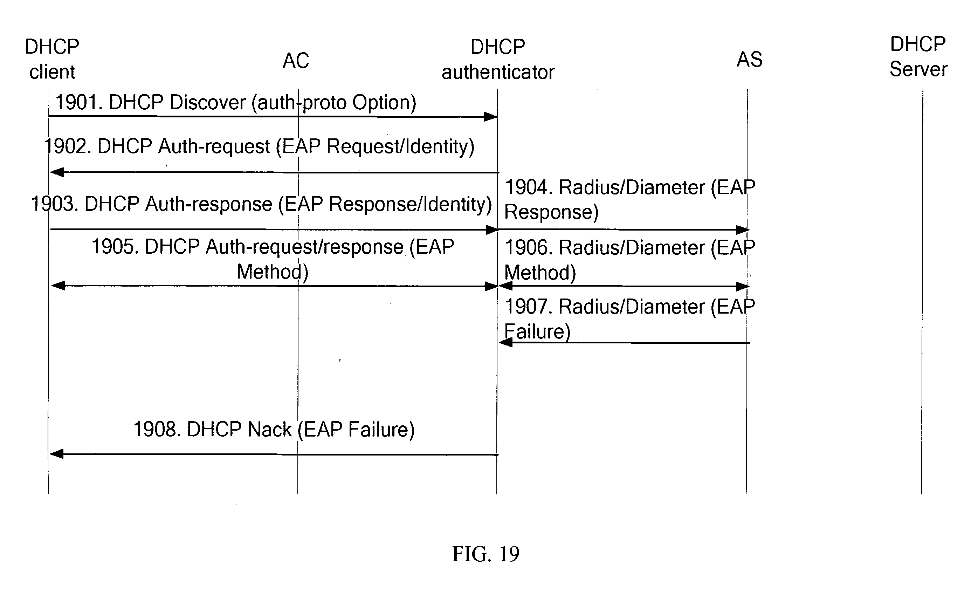

FIG. 19 is another flowchart of initial unsuccessful DHCP authentication through the new DHCPv4 messages and DHCP options listed in Table 6. The initial DHCP authentication process described in steps S1901 to S 1906 is the same as that described in steps 1701 to 1706. The process after the AS authentication fails includes the following steps:
Step S1907: The DHCP authenticator receives an EAP Failure message sent by the AS.
Step S1908: The DHCP authenticator re-encapsulates the EAP Failure message into a DHCP NACK message or a DHCP Offer message, and forwards the message to the DHCP client.

The DHCPv4 authentication process implemented by different combinations of new DHCP messages and DHCP options is described above. Similarly, the DHCPv6 authentication process may be implemented by different combinations of new DHCP messages and DHCP options described in Table 7. Details are omitted here.

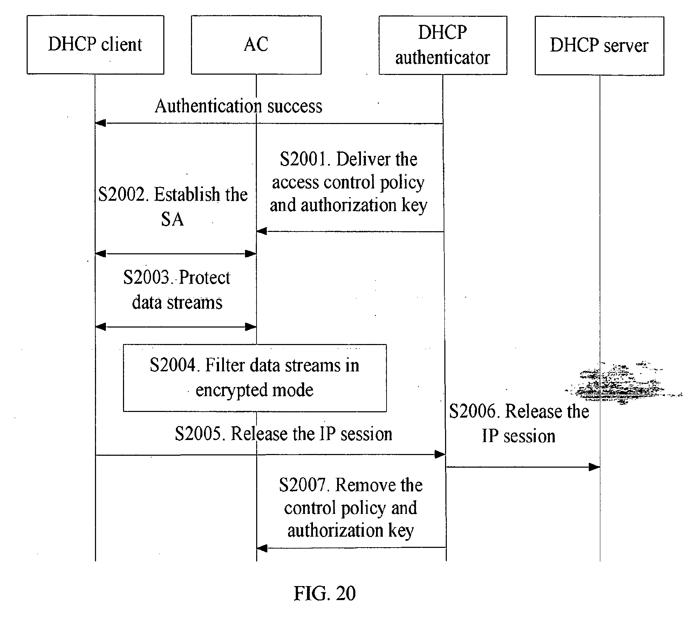

After the initial authentication or re-authentication succeeds, the DHCP client may connect to the network to access data. In this case, the AC is required to monitor the data streams of the client to ensure the data confidentiality during data sessions. During data sessions, the DHCP client and the DHCP authenticator may send IP session test data to detect the TTL of the IP sessions on the ports of the peer. FIG. 20 is a flowchart of filtering data streams in encrypted mode after the DHCP authentication succeeds. It includes the following steps:

After the authentication succeeds, the DHCP authenticator returns an EAP Success message to the DHCP client, and starts to perform step S2001 to interact with the AC.
Step S2001: The DHCP authenticator sends the access control policy and the authentication key of the DHCP client to the AC.
Step S2002: After receiving the access control policy and authentication key of the DHCP client, the AC establishes an SA with the DHCP client through the IKE, 802.11i 4WHS, or 802.16 3WHS protocol.
Step S2003: After the SA between the DHCP client and the AC is established, the AC uses the link-layer or network-layer encryption protocol to protect the data streams.
Step S2004: The AC filters out the unsecured messages from the data streams in encrypted mode.
Step S2005: When the entire IP session of the DHCP client ends, the DHCP client sends a DHCP Release message to the AS to terminate the IP session.

When detecting that the DHCP client disconnects the IP session due to incidents, the AC immediately sends a DHCP Release message to notify the DHCP authenticator of the IP session termination.
Step S2006: After receiving the DHCP Release message, the DHCP authenticator forwards the message to the DHCP server, and the DHCP server releases the IP address of the DHCP client.
Step S2007: After receiving the DHCP Release message, the DHCP authenticator requests the AC to remove the access control policy and authentication key of the DHCP client.

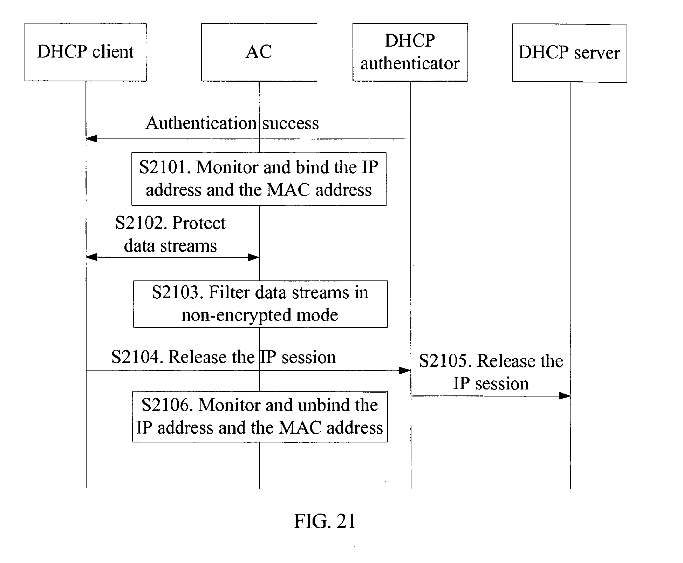

The process of filtering data streams in encrypted mode after the DHCP authentication succeeds is described above. An embodiment of the present invention implements data stream filtering in non-encrypted mode through the success message monitored by the AC after the authentication succeeds. FIG. 21 shows the flowchart. The process includes the following steps:
Step S2101: The AC monitors the DHCP messages, and binds the IP address and physical address (for example, MAC address) of the DHCP client when the EAP Success message is returned.
Step S2102: The DHCP client transmits data streams through the assigned IP address.
Step S2103: The AC filters out the packets in non-encrypted mode if the IP address of the DHCP client in the packets mismatches the user's MAC address.
Step S2104: When the entire IP session of the DHCP client ends, the DHCP client sends a DHCP Release message to the AC to terminate the IP session.

When detecting that the DHCP client disconnects the IP session due to incidents, the AC immediately sends a DHCP Release message to notify the DHCP authenticator of the IP session termination.
Step S2105: When detecting the DHCP Release message or the IP session link break, the AC unbinds the IP address and MAC address of the DHCP client.
Step S2106: The DHCP authenticator forwards the DHCP Release message to the DHCP server. The DHCP server releases the IP address of the DHCP client according to the received message.

To sum up, by setting multiple authenticators in the IP network to authenticate the DHCP client as an agent of the DHCP client, authentication is implemented without any change to the DHCP server; by setting temporary IP addresses during the authentication, the session authentication is implemented during the authentication, thus improving the stability, efficiency and success rate of the authentication. Embodiments of the present invention introduce ACs to separate the control plane from the data plane and support data access and filtering, thus ensuring the security of the data plane. The re-authentication mechanism is adopted for initiating re-authentication to reassign an IP address to the DHCP client for the IP session when the lease of the DHCP client is about to expire. The re-authentication process may be triggered by the DHCP client or the DHCP authenticator. The authentication method provided in embodiments of the present invention may be applied in IPv4 and IPv6 through different DHCP messages.

Although the technical solution of the present invention has been described through several exemplary embodiments, the invention is not limited to such embodiments.

## Claims

1. A network access method, comprising:
receiving (S501; S701), by an access authenticator, a first Dynamic Host Configuration Protocol, DHCP, message sent by a client, wherein the first DHCP message is used to discover the access authenticator, wherein the first DHCP message is a DHCP discover message (S501) or a DHCP solicit message (S701);
forwarding (S502; S702), by the access authenticator, the first DHCP message to a configuration server;
receiving (S503; S703), by the access authenticator, a second DHCP message sent by the configuration server, wherein the second DHCP message is a DHCP offer message (S503) or a DHCP advertise message (S703) and wherein the second DHCP message carries first configuration information which comprises an unleased IP address;
recording (S504; S704), by the access authenticator, the unleased IP address of the first configuration information carried in the second DHCP message; and
replacing (S504; S704), by the access authenticator, the unleased IP address of the first configuration information in the second DHCP message with the IP address to be used by the client in the local network during authentication, and sending the second DHCP message to the client;
the method further comprising:
upon receiving, by the access authenticator, a DHCP request message containing a Extensible Authentication Protocol, EAP response sent by the client (S507, S707), authenticating (S508-S511; S708-S711), by the access authenticator, the client locally or interacting with an authenticator server, AS, to authenticate the client remotely as an agent of the client; and
if the authentication is successful, sending (S512; S712), by the access authenticator, a third DHCP message constructed according to said recorded unleased IP address, to the configuration server to request second configuration information to be used by the client in a session, wherein the third DHCP message is a DHCP request message (S512; S712);
receiving (S513; S713), by the access authenticator, a fourth DHCP message from the configuration server, wherein the fourth DHCP message is a DHCP ACK message (S513) or a DHCP reply message (S713) and wherein the fourth DHCP message carries the second configuration information; and
sending (S514; S714), by the access authenticator, the second configuration information carried in the fourth DHCP message to the client.

2. The method of claim 1, further comprising:
monitoring by an access controller packets or data streams transmitted and/or received by the client; and
filtering the packets or data streams in non-encrypted or encrypted mode using a control policy during the session.

3. The method of claim 1, wherein:
the first DHCP message carries an authentication mode supported by the client; and
the responding to the first DHCP message comprises: sending, by the access authenticator, an authentication mode supported by the access authenticator to the client.

4. The method of claim 1, wherein:
the access authenticator and the authentication server, AS exchange messages through an Application Programming Interface ,API, protocol when the access authenticator and the authentication server, AS are located in a same physical entity; and
the access authenticator and the authentication server, AS exchange messages through an Authentication, Authorization, and Accounting ,AAA, protocol, or a Remote Authentication Dial in User Service ,RADIUS, protocol, or a Diameter protocol ,an upgrade version of the RADIUS protocol, when the access authenticator and the authentication server AS are located in different physical entities.

5. A network access system, comprising a client (301), an access authenticator (302), and a configuration server (303),
the client is configured to send a first Dynamic Host Configuration Protocol, DHCP, message to the access authenticator, wherein the first DHCP message is a DHCP discover message or a DHCP solicit message;
the access authenticator is configured to receive the first DHCP message, wherein the first DHCP message is used to discover the access authenticator, and configured to forward the first DHCP message to the configuration server; receive a second DHCP message sent by the configuration server, wherein the second DHCP message is a DHCP offer message or a DHCP advertise message and wherein the second DHCP message carries first configuration information which comprises an unleased IP address; record the unleased IP address of the first configuration information carried in the second DHCP message; and replace the unleased IP address of the first configuration information in the second DHCP message with the IP address to be used by the client in the local network during authentication, and sending the second DHCP message to the client;
upon receiving a DHCP request message containing a Extensible Authentication Protocol, EAP response sent by the DHCP, the access authenticator is further configured to authenticating the client locally or interacting with an authenticator server (304), AS, to authenticate the client remotely as an agent of the client; and if the authentication is successful, send a third DHCP message constructed according to said recorded unleased IP address to the configuration server to request second configuration information to be used by the client in a session wherein the third DHCP message is a DHCP request message; receive a fourth DHCP message from the configuration server, wherein the fourth DHCP message is a DHCP ACK message or a DHCP reply message and wherein the fourth DHCP message carries the second configuration information; and send the second configuration information carried in the fourth DHCP message to the client.

6. The system of claim 5, further comprising an access controller (305), AC, wherein the AC is configured to monitor packets or data streams transmitted and/or received by the client; and filter the packets or data streams in non-encrypted or encrypted mode using a control policy during the session.

7. The system of claim 5, wherein:
the first DHCP message carries an authentication mode supported by the client; and
the access authenticator is further configured to send an authentication mode supported by the access authenticator to the client.

8. The system of claim 5, wherein:
the access authenticator and the authentication server, AS exchange messages through an Application Programming Interface, API, protocol when the access authenticator and the authentication server, AS are located in a same physical entity; and
the access authenticator and the authentication server, AS exchange messages through an Authentication, Authorization, and Accounting, AAA, protocol, or a Remote Authentication Dial in User Service, RADIUS, protocol, or a Diameter protocol ,an upgrade version of the RADIUS protocol, when the access authenticator and the authentication server, AS are located in different physical entities.

## Patentansprüche

1. Netzzugangsverfahren, das Folgendes umfasst:
Empfangen (S501; S701) durch eine Zugangsauthentifizierungseinheit einer ersten Nachricht des dynamischen Hostkonfigurationsprotokolls (Dynamic Host Configuration Protocol message, DHCP-Nachricht), die durch einen Client gesendet wird, wobei die erste DHCP-Nachricht verwendet wird, um die Zugangsauthentifizierungseinheit zu ermitteln, wobei die erste DHCP-Nachricht eine DHCP-Ermittlungsnachricht (S501) oder eine DHCP-Anbahnungsnachricht (S701) ist;
Weiterleiten (S502; S702) der ersten DHCP-Nachricht durch die Zugangsauthentifizierungseinheit zu einem Konfigurationsserver;
Empfangen (S503; S703) einer zweiten DHCP-Nachricht, die durch den Konfigurationsserver gesendet wird, durch die Zugangsauthentifizierungseinheit, wobei die zweite DHCP-Nachricht eine DHCP-Angebotsnachricht (S503) oder eine DHCP-Werbungsnachricht (S703) ist und wobei die zweite DHCP-Nachricht erste Konfigurationsinformationen führt, die eine nicht vergebene IP-Adresse umfassen;
Aufzeichnen (S504; S704) der nicht vergebenen IP-Adresse der ersten Konfigurationsinformationen, die in der zweiten DHCP-Nachricht geführt werden, durch die Zugangsauthentifizierungseinheit; und
Ersetzen (S504; S704) der nicht vergebenen IP-Adresse der ersten Konfigurationsinformationen in der zweiten DHCP-Nachricht durch die IP-Adresse, die durch den Client in dem lokalen Netz während der Authentifizierung verwendet werden soll, durch die Zugangsauthentifizierungseinheit und Senden der zweiten DHCP-Nachricht zu dem Client;
wobei das Verfahren ferner Folgendes umfasst:
beim Empfangen einer DHCP-Anforderungsnachricht, die eine Antwort des erweiterbaren Authentifizierungsprotokolls, EAP-Antwort, enthält, die durch den Client gesendet wird (S507, S707), durch die Zugangsauthentifizierungseinheit, Authentifizieren (S508-5511; S708-S711) des Client lokal durch die Zugangsauthentifizierungseinheit oder Zusammenwirken mit einem Authentifizierungsserver, AS, um den Client als ein Agent des Client entfernt zu authentifizieren; und
falls die Authentifizierung erfolgreich ist, Senden (S512; S712) einer dritten DHCP-Nachricht, die gemäß der aufgezeichneten nicht vergebenen IP-Adresse konstruiert ist, durch die Zugangsauthentifizierungseinheit zu dem Konfigurationsserver, um zweite Konfigurationsinformationen anzufordern, die durch den Client in einer Sitzung verwendet werden sollen, wobei die dritte DHCP-Nachricht eine DHCP-Anforderungsnachricht ist (S512; S712);
Empfangen (S513; S713) einer vierten DHCP-Nachricht durch die Zugangsauthentifizierungseinheit von dem Konfigurationsserver, wobei die vierte DHCP-Nachricht eine DHCP-ACK-Nachricht (S513) oder eine DHCP-Antwortnachricht (S713) ist und wobei die vierte DHCP-Nachricht die zweiten Konfigurationsinformationen führt; und
Senden (S514; S714) der zweiten Konfigurationsinformationen, die in der vierten DHCP-Nachricht geführt sind, durch die Zugangsauthentifizierungseinheit zu dem Client.

2. Verfahren nach Anspruch 1, das ferner Folgendes umfasst:
Überwachen von Paketen oder Datenströmen, die durch den Client gesendet und/oder empfangen werden, durch eine Zugangssteuerungseinheit; und
Filtern der Pakete oder Datenströme in einer nicht verschlüsselten oder verschlüsselten Betriebsart unter Verwendung einer Steuerstrategie während der Sitzung.

3. Verfahren nach Anspruch 1, wobei:
die erste DHCP-Nachricht einen Authentifizierungsmodus führt, der durch den Client unterstützt wird; und
das Antworten auf die erste DHCP-Nachricht Folgendes umfasst: Senden eines Authentifizierungsmodus, der durch die Zugangsauthentifizierungseinheit unterstützt wird, durch die Zugangsauthentifizierungseinheit zu dem Client.

4. Verfahren nach Anspruch 1, wobei:
die Zugangsauthentifizierungseinheit und der Authentifizierungsserver, AS, Nachrichten über ein Anwendungsprogrammierungsschnittstellen-Protokoll (Application Programming Interface protocol, API-Protokoll) austauschen, wenn sich die Zugangsauthentifizierungseinheit und der Authentifizierungsserver, AS, in einer selben physikalischen Entität befinden; und
die Zugangsauthentifizierungseinheit und der Authentifizierungsserver, AS, Nachrichten über ein Authentifizierungs-, Autorisierungs- und Abrechnungsprotokoll, AAA-Protokoll, oder ein Protokoll des Anwendereinwähldienstes für entfernte Authentifizierung (Remote Authentication Dial in User Service protocol, RADIUS-Protokoll) oder ein Diameter-Protokoll, eine Erweiterungsversion des RADIUS-Protokolls, austauschen, wenn sich die Zugangsauthentifizierungseinheit und der Authentifizierungsserver, AS, in unterschiedlichen physikalischen Entitäten befinden.

5. Netzzugangssystem, das einen Client (301), eine Zugangsauthentifizierungseinheit (302) und einen Konfigurationsserver (303) umfasst,
wobei der Client konfiguriert ist, eine erste Nachricht des dynamischen Hostkonfigurationsprotokolls, DHCP-Nachricht, zu der Zugangsauthentifizierungseinheit zu senden, wobei die erste DHCP-Nachricht eine DHCP-Ermittlungsnachricht oder eine DHCP-Anbahnungsnachricht ist;
die Zugangsauthentifizierungseinheit konfiguriert ist, die erste DHCP-Nachricht zu empfangen, wobei die erste DHCP-Nachricht verwendet wird, um die Zugangsauthentifizierungseinheit zu ermitteln, und konfiguriert ist, die erste DHCP-Nachricht zu dem Konfigurationsserver weiterzuleiten; eine zweite DHCP-Nachricht, die durch den Konfigurationsserver gesendet wird, zu empfangen, wobei die zweite DHCP-Nachricht eine DHCP-Angebotsnachricht oder eine DHCP-Werbungsnachricht ist und wobei die zweite DHCP-Nachricht erste Konfigurationsinformationen führt, die eine nicht vergebene IP-Adresse umfassen; die nicht vergebene IP-Adresse der ersten Konfigurationsinformationen, die in der zweiten DHCP-Nachricht geführt sind, aufzuzeichnen; und die nicht vergebene IP-Adresse der ersten Konfigurationsinformationen in der zweiten DHCP-Nachricht durch die IP-Adresse, die durch den Client in dem lokalen Netz während der Authentifizierung verwendet werden soll, zu ersetzen und die zweite DHCP-Nachricht zu dem Client zu senden;
beim Empfangen einer DHCP-Anforderungsnachricht, die eine Antwort des erweiterbaren Authentifizierungsprotokolls, EAP-Antwort, enthält, die durch das DHCP gesendet wird, die Zugangsauthentifizierungseinheit ferner konfiguriert ist, den Client lokal zu authentifizieren oder mit einem Authentifizierungsserver (304), AS, zusammenzuwirken, um den Client als ein Agent des Client entfernt zu authentifizieren; und falls die Authentifizierung erfolgreich ist, eine dritte DHCP-Nachricht, die gemäß der aufgezeichneten nicht vergebenen IP-Adresse konstruiert ist, zu dem Konfigurationsserver zu senden, um zweite Konfigurationsinformationen anzufordern, die durch den Client in einer Sitzung verwendet werden sollen, wobei die dritte DHCP-Nachricht eine DHCP-Anforderungsnachricht ist; eine vierte DHCP-Nachricht von dem Konfigurationsserver zu empfangen, wobei die vierte DHCP-Nachricht eine DHCP-ACK-Nachricht oder eine DHCP-Antwortnachricht ist und wobei die vierte DHCP-Nachricht die zweiten Konfigurationsinformationen führt; und die zweiten Konfigurationsinformationen, die in der vierten DHCP-Nachricht geführt sind, zu dem Client zu senden.

6. System nach Anspruch 5, das ferner eine Zugangssteuerungseinheit (305), AC, umfasst, wobei die AC konfiguriert ist, Pakte oder Datenströme zu überwachen, die durch den Client gesendet und/oder empfangen werden; und die Pakete oder Datenströme in einer nicht verschlüsselten oder verschlüsselten Betriebsart unter Verwendung einer Steuerstrategie während der Sitzung zu filtern.

7. System nach Anspruch 5, wobei:
die erste DHCP-Nachricht einen Authentifizierungsmodus führt, der durch den Client unterstützt wird; und
die Zugangsauthentifizierungseinheit ferner konfiguriert ist, einen Authentifizierungsmodus, der durch die Zugangsauthentifizierungseinheit unterstützt wird, zu dem Client zu senden.

8. System nach Anspruch 5, wobei:
die Zugangsauthentifizierungseinheit und der Authentifizierungsserver, AS, Nachrichten über ein Anwendungsprogrammierungsschnittstellen-Protokoll, API-Protokoll, austauschen, wenn sich die Zugangsauthentifizierungseinheit und der Authentifizierungsserver, AS, in einer selben physikalischen Entität befinden; und
die Zugangsauthentifizierungseinheit und der Authentifizierungsserver, AS, Nachrichten über ein Authentifizierungs-, Autorisierungs- und Abrechnungsprotokoll, AAA-Protokoll, oder ein Protokoll des Anwendereinwähldienstes für entfernte Authentifizierung, RADIUS-Protokoll, oder ein Diameter-Protokoll, eine Erweiterungsversion des RADIUS-Protokolls, austauschen, wenn sich die Zugangsauthentifizierungseinheit und der Authentifizierungsserver, AS, in unterschiedlichen physikalischen Entitäten befinden.

## Revendications

1. Procédé d'accès de réseau, comprenant :
la réception (S501 ; S701), par un authentificateur d'accès, d'un premier message de Protocole DHCP (Dynamic Host Configuration Protocol), envoyé par un client, le premier message DHCP étant utilisé pour découvrir l'authentificateur d'accès, le premier message DHCP étant un message DHCP Discover (S501) ou un message DHCP Solicit (S701);
l'acheminement (S502 ; S702), par l'authentificateur d'accès, du premier message DHCP à un serveur de configuration ;
la réception (S503 ; S703) par l'authentificateur d'accès, d'un second message DHCP envoyé par le serveur de configuration, le second message DHCP étant un message DHCP Offer (S503) ou un message DHCP Advertise (S703) et le second message DHCP portant des premières informations de configuration qui comprennent une adresse IP non louée ;
l'enregistrement (S504 ; S704), par l'authentificateur d'accès, de l'adresse IP non louée des premières informations de configuration portées dans le second message DHCP ; et
le remplacement (S504 ; S704), par l'authentificateur d'accès, de l'adresse IP non louée des premières informations de configuration dans le second message DHCP par l'adresse IP devant être utilisée par le client dans le réseau local durant l'authentification, et l'envoi du second message DHCP au client ;
le procédé comprenant en outre :
à la réception, par l'authentificateur d'accès, d'un message DHCP Request contenant une réponse EAP (Extensible Authentication Protocol), envoyé par le client (S507, S707), l'authentification (S508-S511 ; S708-S711), par l'authentificateur d'accès, du client localement ou l'interaction avec un serveur authentificateur, AS, pour authentifier le client à distance comme agent du client ; et
si l'authentification réussit, l'envoi (S512, S712), par l'authentificateur d'accès, au serveur de configuration d'un troisième message DHCP construit en fonction de ladite adresse IP non louée enregistrée, pour demander des secondes informations de configuration que doit utiliser le client dans une session, le troisième message DHCP étant un message DHCP Request (S512, S712) ;
la réception (S513 ; S713), par l'authentificateur d'accès, d'un quatrième message DHPC depuis le serveur de configuration, le quatrième message DHCP étant un message DHCP ACK (S513) ou un message DHCP Reply (S713) et dans lequel le quatrième message DHCP comporte les secondes informations de configuration ; et
l'envoi (S514 ; S714) au client, par l'authentificateur d'accès, des secondes informations de configuration incluses dans le quatrième message DHCP.

2. Procédé selon la revendication 1, comprenant en outre :
la surveillance, par un contrôleur d'accès, de paquets ou de flux de données transmis et/ou reçus par le client ; et
le filtrage des paquets ou des flux de données dans un mode non crypté ou crypté en utilisant une stratégie de commande durant la session.

3. Procédé selon la revendication 1, dans lequel :
le premier message DHCP comporte un mode d'authentification supporté par le client ; et
la réponse au premier message DHCP comprend : l'envoi au client, par l'authentificateur d'accès, d'un mode d'authentification supporté par l'authentificateur d'accès.

4. Procédé selon la revendication 1, dans lequel :
l'authentificateur d'accès et le serveur authentificateur AS échangent des messages par le biais d'un protocole API (Application Programming Interface), quand l'authentificateur d'accès et le serveur authentificateur AS sont situés dans une même entité physique ; et
l'authentificateur d'accès et le serveur authentificateur AS échangent des messages par le biais d'un protocole AAA (Authentication, Authorization and Accounting), ou
d'un protocole RADIUS, (Remote Authentication Dial-in User Service), ou d'un protocole Diameter, une version supérieure du protocole RADIUS, quand l'authentificateur d'accès et le serveur authentificateur AS sont situés dans des entités physiques différentes.

5. Système d'accès de réseau, comprenant un client (301), un authentificateur d'accès (302), et un serveur de configuration (303), dans lequel :
le client est configuré pour envoyer à l'authentificateur d'accès un premier message de Protocole DHCP (Dynamic Host Configuration Protocol), le premier message DHCP étant un message DHCP Discover ou un message DHCP Solicit ;
l'authentificateur d'accès est configuré pour recevoir le premier message DHCP, le premier message DHCP étant utilisé pour découvrir l'authentificateur d'accès, et configuré pour acheminer le premier message DHCP au serveur de configuration ;
recevoir un second message DHCP envoyé par le serveur de configuration, le second message DHCP étant un message DHCP Offer ou un message DHCP Advertise et le second message DHCP comportant des premières informations de configuration qui comprennent une adresse IP non louée ; enregistrer l'adresse IP non louée des premières informations de configuration incluses dans le second message DHCP ; et
remplacer l'adresse IP non louée des premières informations de configuration dans le second message DHCP par l'adresse IP devant être utilisée par le client dans le réseau local durant l'authentification, et envoyer le second message DHCP au client ;
à la réception d'un message de requête DHCP contenant une réponse EAP (Extensible Authentication Protocol), envoyé par le DHCP, l'authentificateur d'accès est configuré en outre pour authentifier le client localement ou interagir avec un serveur authentificateur, AS (304), pour authentifier le client à distance comme agent du client ; et si l'authentification réussit, envoyer un troisième message DHCP construit en fonction de ladite adresse IP non louée enregistrée au serveur de configuration pour demander des secondes informations de configuration que doit utiliser le client dans une session, le troisième message DHCP étant un message DHCP Request ; recevoir un quatrième message DHPC depuis le serveur de configuration, le quatrième message DHCP étant un message DHCP ACK ou un message DHCP Reply et le quatrième message DHCP comportant les secondes informations de configuration ; et envoyer les secondes informations de configuration incluses dans le quatrième message DHCP au client.

6. Système selon la revendication 5, comprenant en outre un contrôleur d'accès (305), AC, l'AC étant configuré pour surveiller des paquets ou des flux de données transmis et/ou reçus par le client ; et filtrer les paquets ou les flux de données dans un mode non crypté ou crypté en utilisant une stratégie de commande durant la session.

7. Système selon la revendication 5, dans lequel :
le premier message DHCP comporte un mode d'authentification supporté par le client ; et
l'authentificateur d'accès est configuré en outre pour envoyer au client un mode d'authentification supporté par l'authentificateur d'accès.

8. Système selon la revendication 5, dans lequel :
l'authentificateur d'accès et le serveur authentificateur AS échangent des messages par le biais d'un protocole API (Application Programming Interface), quand l'authentificateur d'accès et le serveur authentificateur AS sont situés dans une même entité physique ; et
l'authentificateur d'accès et le serveur authentificateur AS échangent des messages par le biais d'un protocole AAA (Authentication, Authorization and Accounting), ou
d'un protocole RADIUS (Remote Authentication Dial-in User Service), ou d'un protocole Diameter, une version supérieure du protocole RADIUS, quand l'authentificateur d'accès et le serveur authentificateur AS sont situés dans des entités physiques différentes.
